# EUROPÄISCHE PATENTANMELDUNG

(11) **EP 3 929 790 A1**
(43) Veröffentlichungstag der Anmeldung: **29.12.2021**
(21) Anmeldenummer: 20181659.2
(22) Anmeldetag: 23.06.2020
(51) Int. Cl.: G06F 30/13, G06F 111/04

(54) **NETZWERKBASIERTES VERFAHREN FÜR EINEN ENTWURF VON MINDESTENS EINEM WOHNGEBÄUDE**

(71) Anmelder: SPB Systemisches Planen und Bauen GmbH, 12529 Schönefeld (DE)
(72) Erfinder: Sprajcar, Robert, 16515 Oranienburg (DE); Mohr, Thomas A., 21614 Buxtehude (DE); Klatte, Nils, 27777 Ganderkesee (DE)
(74) Vertreter: Hertin und Partner Rechts- und Patentanwälte PartG mbB

(57) **Zusammenfassung**

Die Erfindung betrifft ein Computer- und/oder Netzwerkbasiertes Verfahren für die Planung von mindestens einem Wohngebäude, umfassend mindestens eine Wohnung und mindestens eine Erschließung, wobei das Verfahren die Bereitstellung von Modulen umfasst, welche technische Vorgaben, Parameterbereiche für Abmessungen und/oder Restriktionen für den jeweiligen Typ enthalten. Ebenso sind die Erstellung und Speicherung einer Matrix umfasst, welche alle möglichen Grundrisslösungen und dazugehörige angepasste Module für jeden Grundriss enthält. Anschließend werden möglichen Kombinationen von Erschließungen, Wohnungen und/oder Wohngebäuden berechnet, gespeichert sowie visuell dargestellt.

In einem weiteren Aspekt betrifft die Erfindung ein Computerprogrammprodukt zur Ausführung des Verfahrens.

## Beschreibung

Die Erfindung betrifft ein Computer- und/oder Netzwerkbasiertes Verfahren für die Planung von mindestens einem Wohngebäude, umfassend mindestens eine Wohnung und mindestens eine Erschließung, wobei das Verfahren die Bereitstellung von Modulen umfasst, welche technische Vorgaben, Parameterbereiche für Abmessungen und/oder Restriktionen für den jeweiligen Typ enthalten. Ebenso sind die Erstellung und Speicherung einer Matrix umfasst, welche alle möglichen Grundrisslösungen und dazugehörige angepasste Module für jeden Grundriss enthält. Anschließend werden möglichen Kombinationen von Erschließungen, Wohnungen und/oder Wohngebäuden berechnet, gespeichert sowie visuell dargestellt.

In einem weiteren Aspekt betrifft die Erfindung ein Computerprogrammprodukt zur Ausführung des Verfahrens.

### Hintergrund und Stand der Technik

Die Planung von Wohngebäuden, insbesondere von Mehrfamilienhäusern, ist umfangreich und komplex. Es müssen technische Aspekte, Wohnkomfort, Ästhetik und Kosten sowie mögliche Nutzungen berücksichtigt und ggf. gegeneinander abgewogen werden. Gerade in Zeiten der Wohnraumknappheit soll einerseits schnell neuer Wohnraum entstehen, welcher andererseits den o. g. und weiteren Anforderungen genügt. Dies stellt die Planung von Wohngebäuden vor besondere Herausforderungen. Bei Mehrfamilienhäusern müssen darüber hinaus einzelne Wohnungen und der gewünschte Mix verschiedener Wohnungen (z. B. 2-Raumwohnung, 3-Raumwohnung), Erschließungen (z. B. Treppenhäuser, Eingangsbereiche) und die Anforderungen und Restriktionen bezüglich des gesamten Wohngebäudes in Relation gebracht werden.

Es existieren technische Standards, Gesetze und Normen des Bauens. Bei der Planung können einige Größen von vorneherein vorgegeben sein, z. B. der geplante Wohnungsmix bei einem Mehrfamilienhaus, aber auch die Grundrissabmessungen und Anzahl der Stockwerke des gesamten Wohngebäudes. Auch durch Vorschriften sind einige Vorgaben fix. Jedoch ist jeder Bau aufgrund äußerer Vorgaben, durch Wünsche des Bauherren etc. höchst individuell und technische Größen, welche z. B. Einfluss auf die Statik des Gebäudes haben, sind jedes Mal aufs Neue zu bestimmen.

Daher besteht ein großer Bedarf für ein computer- und/oder netzwerkbasiertes Planungsverfahren, welches den genannten Anforderungen gerecht wird, dabei eine schnelle und dennoch individualisierbare Planung unter Berücksichtigung komplexer technischer Größen ermöglicht und dem Planer vorab einen guten Ausblick auf das fertige Gebäude ermöglicht sowie einen Überblick über die benötigten Materialien etc. gibt. So kann der Bauherr vorab aus u. U. mehreren möglichen Wohngebäuden eine qualifizierte Auswahl treffen, welche seine Präferenzen optimal widerspiegelt.

### Aufgabe der Erfindung

Aufgabe der Erfindung ist es, ein computer- und/oder netzwerkbasiertes Planungsverfahren sowie ein entsprechendes Computerprogrammprodukt ohne die Nachteile des Standes der Technik bereitzustellen. Aufgabe der Erfindung ist es weiterhin, ein computer- und/oder netzwerkbasiertes Planungsverfahren sowie ein entsprechendes Computerprogrammprodukt bereitzustellen, welches effizient und umfassend die Planung von Wohngebäuden ermöglicht und dabei in der Lage ist, eine Vielzahl von verschiedenen möglichen Kombinationen zusammenzustellen, welche einer Vielzahl von Vorgaben, insbesondere technische Vorgaben berücksichtigt und dabei technische Größen, wie z. B. die Gebäudestatik berücksichtigt.

### Zusammenfassung der Erfindung

Die Aufgabe wird durch die Merkmale der unabhängigen Ansprüche gelöst. Bevorzugte Ausführungsformen der Erfindung sind in den abhängigen Ansprüchen beschrieben.

In einem ersten Aspekt betrifft die Erfindung ein computer- und/oder netzwerkbasiertes Verfahren für eine Planung von mindestens einem Gebäude für mindestens einen vorgegebenen Gebäudetyp und/oder vorgegebenen Abmessungen des Gebäudes,
umfassend mindestens eine Gebäudeuntereinheit, wobei das Verfahren die folgenden Schritte umfasst:
- Bereitstellung von Modulen fürjeweils mindestens einen Gebäudetyp und mindestens einen Gebäudeuntereinheitstyp,
   wobei die jeweiligen Module wesentliche technische Vorgaben, Parameterbereiche für Abmessungen und/oder Restriktionen für den jeweiligen Gebäudetyp und die jeweilige Untereinheit enthalten;
- Erstellung und Speicherung einer Untereinheits-Matrix für den mindestens einen Gebäudeuntereinheitstyp unter Berücksichtigung der Module für die jeweilige Gebäudeuntereinheit, wobei die Untereinheits-Matrix alle möglichen Grundrisse der Gebäudeuntereinheit und dazugehörige angepasste Module für jeden Grundriss umfasst,
- Berechnung und Speicherung von möglichen Kombinationen von Gebäuden und Gebäudeuntereinheiten unter Berücksichtigung:
   i. der Module für den Gebäudetyp und/oder der vorgegebenen Abmessungen des Gebäudes,
   ii. der mindestens einen Untereinheits-Matrix,
wobei bautechnische Größen unter gegenseitiger Berücksichtigung der Module bestimmt und/oder angepasst werden.

Eine Planung kann bevorzugt auch ein Entwurf sein.

Ein Gebäude ist z. B. ein Wohngebäude und/oder ein Bürogebäude. Eine Gebäudeuntereinheit ist bevorzugt mindestens ein Möbel, ein Raum, eine Wohnung, ein Geschoss und/oder eine Erschließung. Ein Gebäudeuntereinheitstyp ist insbesondere ein Geschosstyp, ein Wohnungstyp, ein Erschließungstyp, ein Raumtyp und/oder ein Möbeltyp.

Das Verfahren verwendet vorteilhafterweise mindestens eine äußere Einheit und eine darin enthaltene, innere Untereinheit, wobei die Einheiten einander angepasst werden. Die äußere Einheit kann ebenfalls eine übergeordnete Untereinheit sein (Bspw. innere Untereinheit "Raum", äußere Einheit "Wohnung') oder ein Gebäude. Der Grundgedanke erinnert an das bekannte "Mamuschka"-Prinzip äußerer und darin enthaltener innerer kleinerer Puppen, die größenmäßig jeweils aneinander angepasst sind.

Ein Computer- und/oder netzwerkbasiertes Verfahren für die Planung bzw. einen Entwurf von mindestens einem Wohngebäude für mindestens einen vorgegebenen Gebäudetyp und/oder vorgegebenen Abmessungen des Wohngebäudes, ist ein Verfahren, welches unter Verwendung mindestens eines Computers und/oder eines Zusammenschlusses mehrerer Computer, z. B. in einem Netzwerk, durchgeführt wird.

Ein Gebäudetyp beschreibt bevorzugt die grundsätzliche Ausführung des Gebäudes, das umfasst insbesondere die grundsätzliche Dimensionierung, also bevorzugt das Verhältnis zwischen Breite, Höhe und Tiefe, die Anzahl der Stockwerke, die Verwendung eines Flach- oder Schrägdaches o. ä.

Die Abmessungen des Wohngebäudes umfassen bevorzugt die Grundfläche sowie die Höhe des Gebäudes.

Das Wohngebäude umfasst mindestens eine Wohnung. Eine Wohnung ist bevorzugt von einem bestimmten Wohnungstyp. Ein Wohnungstyp umfasst vorzugsweise die Anzahl an Räumen einer Wohnung. Ein Wohnungstyp ist z. B. eine 1-Raumwohnung, eine 2-Raumwohnung, eine 3-Raumwohnung, eine 4-Raumwohnung, eine 5-Raumwohnung, eine 6-Raumwohnung, eine 7-Raumwohnung, eine 8-Raumwohnung, eine 9-Raumwohnung, eine 10-Raumwohnung, eine 11-Raumwohnung, eine 12-Raumwohnung, eine 13-Raumwohnung, eine 14-Raumwohnung, eine 15-Raumwohnung etc. Dabei werden vorzugsweise das oder die Badezimmer bzw. die Küche(n) für die Anzahl der Räume nicht mitgezählt. Ein Wohnungstyp kann bspw. auch die Grundform einer Wohnung umfassen, bspw. Rechteck, L-Typ (L-förmig). Auch kann der Wohnungstyp weitere Informationen wie z. B. Barrierefreiheit etc. und Bauteile umfassen.

Ein Geschoss umfasst vorzugsweise mindestens eine Erschießung und mindestens eine Wohnung. Ein Geschoss ist bevorzugt eine Ebene in einer Gebäudelösung.

Eine Erschließung umfasst bevorzugt Zugangswege, Eingangsbereiche, Bauteile und Räume, über die die Nutzer in horizontaler oder vertikaler Richtung die einzelnen Nutzungseinheiten, wie zum Beispiel Wohnungen oder Büros erreichen. Auch sind vorzugsweise Ver- und Entsorgungswege für Anlieferungen, Müllentsorgung etc. umfasst. Horizontale Erschließungen umfassen vorzugsweise Elemente, welche das Erreichen aller Räume auf einer durchgehenden Ebene ermöglichen. Vertikale Erschließungen umfassen bevorzugt Elemente, welche den Zugang zu verschiedenen Geschossen, Etagen, bzw. Stockwerken ermöglichen. Bevorzugt sind horizontale und vertikale Erschließungen eng miteinander verknüpft. Elemente der horizontalen Erschließung sind vorzugsweise ausgesucht aus der Gruppe umfassend Korridor, Hausflur, Galerie (vorzugsweise ein Raum, der länger als breit ist und an mindestens einer seiner beiden Längsseiten zahlreiche Lichtöffnungen aufweist), Laubengang, Enfilade (vorzugsweise eine Aneinanderreihung von Räumen zu einer Zimmerflucht, wobei die Türöffnungen exakt gegenüberliegen) und/oder Atrium (bevorzugt ein rechteckiger Innenraum in der Mitte des Hauses, von dem aus die umliegenden Räume zugänglich sind). Elemente der vertikalen Erschließung sind bevorzugt ausgesucht aus der Gruppe umfassend Treppe, Rampe, Rolltreppe, Aufzugsanlage und/oder Paternosteraufzug. Bevorzugt unterscheidet man unterschiedliche Typen der horizontalen Erschließung: Ein-, Zwei-, Drei-, Mehrspänner (Vier, Fünf-, Sechsspänner etc.), Mittelflur und/oder Laubengang, je nach Anzahl der Nutzungseinheiten, die pro Geschoss von der einen (bevorzugt vertikalen) Erschließung erschlossen werden. Der Erschließungstyp umfasst vorzugsweise Grundinformationen über die Erschließungen, wie z. B. horizontal oder vertikal, Korridor, Treppe, Rampe, Aufzug, Barrierefreiheit, Ein-, Zwei- oder Dreispänner etc.

Das Verfahren umfasst bevorzug die Bereitstellung von Modulen für jeweils mindestens einen Gebäudetyp, mindestens einen Geschosstyp, mindestens einen Erschließungstyp und mindestens einen Wohnungstyp, wobei die jeweiligen Module wesentliche technische Vorgaben,

Parameterbereiche für Abmessungen und/oder Restriktionen für den jeweiligen Typ enthalten. Die Module werden vorzugsweise für jedes Objekt, welches Gegenstand des Verfahrens (z. B. Wohngebäude/Gebäudetyp, Erschließung/Erschließungstyp, Wohnung/Wohnungstyp) ist, vorzugsweise im Vorfeld separat angelegt und vorzugsweise in einer Matrix abgespeichert. Dies ist vorteilhafterweise der Initialisierungsprozess der Matrix. Module werden vorzugsweise auch Steuerungselemente genannt.

Technische Vorgaben sind vorzugsweise ausgesucht aus der Gruppe umfassend die Materialbeschaffenheit von Baustoffen, Wärmeschutzvorgaben (z. B. Wärmeschutzverordnung), Energieeinsparungsvorgaben (z. B. Energiesparverordnung), Wärmedurchlasswiderstand und/oder Wärmedurchgangskoeffizient von Baustoffen, statische Vorgaben, Schallschutzvorgaben, Vorgaben bzgl. Feuchtetransport, Vorgaben bzgl. Strahlung, Wärmeleitung, Wärmestrahlung, Wärmedämmung und/oder Wärmeschutz, Bauakustische Vorgaben, Schallübertragung und/oder Schalldämmung von Baustoffen, Brandschutzvorgaben, Belichtungsvorgaben, Transparenz von Baumaterialien, Brennbarkeit und/oder Entflammbarkeit von Baumaterialien, Festigkeitsvorgaben, insbesondere bzgl. Bruchfestigkeit allgemein, Zugfestigkeit, Druckfestigkeit, Kompressionsfestigkeit, Biegefestigkeit, Biegezugfestigkeit, Torsionsfestigkeit, Scherfestigkeit, Festigkeit von Baumaterialien, insbesondere Bruchfestigkeit allgemein, Zugfestigkeit, Druckfestigkeit, Kompressionsfestigkeit, Biegefestigkeit, Biegezugfestigkeit, Torsionsfestigkeit, Scherfestigkeit, Elastizitätsvorgaben insbesondere bzgl. Elastizitätsmodul, Kompressionsmodul; und/oder Schubmodul; Elastizität von zur Verfügung stehenden Baumaterialien, insbesondere Elastizitätsmodul, Kompressionsmodul; und/oder Schubmodul, Vorgaben für tragende Wände und/oder nicht-tragende Wände, Vorgaben bzgl. Wanddicken und/oder Vorgaben bzgl. Raumhöhen.

Parameterbereiche für Abmessungen umfassen vorzugsweise Minimal- bzw. Maximalabmessungen von Räumen, Balkonen, Erschließungen, Treppenbreite, Treppensteigung, Auftrittsbreite der Treppe, Trittfläche der Treppe, Minimal- bzw. Maximalabstände zwischen: Wänden und Fenstern, Türen und Fenstern, Fenstern untereinander, Türen untereinander, Türen und Wänden, Türen und Decken, Fenstern und Decken, Fenstern und Böden, sowie Parameter, welche die Qualität des Raumes innerhalb eines vorher definierten Spektrums, unter Anderem z.B. in Bezug auf Möblierbarkeit, einordnen.

Restriktionen für den jeweiligen Typ enthalten vorzugsweise Mindestabmessungen, Mindestabstände von Fenstern, Türen, Wänden und/oder Decken zueinander, Mindestgrößenverhältnisse von Fenstern, Türen, Wänden und/oder Decken, von Abmessungen in verschiedene Richtung zueinander von Räumen (bspw. das Verhältnis von x zu y Abmessung eines Raumes), Mindest- bzw. Maximalflächen von Räumen, Wohnungen, Erschließungen und/oder Wohngebäuden, Mindestdicken von Wänden, Vorgaben bzgl. Belichtungsflächen, geologische Vorgaben etc.

Eine bevorzugte Funktion der Module ist es, die Verarbeitung im Verfahren möglichst schlank und effizient zu gestalten, eine weitere ist die Gewährleistung der Berücksichtigung entscheidender technischer, z. B. bauphysikalischer Größen im Planungsprozess. Die Module umfassen insbesondere technische Informationen. Bevorzugt sind alle relevanten Informationen umfasst, wie z. B. tragende Wände, nicht-tragende Wände, Fußbodenaufbauten, Türen, Fenster, Räume, Flächen, Ausstattungen. Diese können mit einem späteren Bauteil verknüpft sein, welches jedoch noch keine 3D-Geometrie enthält. So kann vorteilhafterweise bereits ein Großteil der relevanten Informationen generiert werden, noch bevor ein 3D-Gebäudemodell erstellt wird. Die Module umfassen bevorzugt parametrisierte Linien, die auf einfache grafische Weise z. B. Gebäudeelemente (Wände, Geschossdecken, Fenster, Türen, Möbel, Räume) repräsentieren, an denen im weiteren Verfahren die äquivalenten Bauteile im 3D-Gebäudemodell angelegt und ausgerichtet werden. Die Gebäude- bzw. Teilelemente sind vorzugsweise nach Bauteilgruppen zu unterscheiden (z. B. Wände, Geschossdecken, Türen, Fenster, Treppen, Aufzüge, Möbel, Räume, Sanitärobjekte). Die Linien dienen vorteilhafterweise aber auch der schnellen Visualisierung, da sie bevorzugt dem Grundriss, insbesondere in vereinfachter und/oder schematischer Weise entsprechen. Ein schematischer Grundriss umfasst dabei bspw. die Grundform eines Grundrisses (z. B. L-förmig) ohne genaue Abmessungen.

Ein Modul-Grundriss ist dabei bevorzugt eine Grundrissdarstellung eines Moduls (Wohnung o. Erschließung), so ist z. B. ein "Wohnungs-Modul-Grundriss" eine Grundrissdarstellung eines Wohnungs-Moduls, ein "Erschließungs-Modul-Grundriss" eine Grundrissdarstellung eines Erschließungs-Moduls, ein "Geschoss-Modul-Grundriss" eine Grundrissdarstellung eines Geschosses und vorzugsweise der es beinhaltenden Module/Untereinheiten.

Die Module enthalten vorzugsweise bereits Rauminformationen. Rauminformationen umfassen Nutzungsfläche (NUF), Verkehrsfläche (VF) und Technische Funktionsfläche (TF), welche vorzugsweise die Netto-Raumfläche (NRF) auswertbar machen. Diese Flächenkennwerte sind vorzugsweise nach DIN 277-1 definiert. Die NRF umfasst bevorzugt die Nutzungsfläche, die Technikfläche und die Verkehrsfläche. Die VF umfasst bevorzugt denjenigen Teil der NRF, der dem Zugang zu den Räumen, dem Verkehr innerhalb des Bauwerks und auch dem Verlassen im Notfall dient. Bewegungsflächen innerhalb von Räumen zählen bevorzugt nicht dazu. Die NUF umfasst bevorzugt die Summe der Grundfläche mit Nutzungen (derjenige Teil der NRF, der der Nutzung des Bauwerks aufgrund seiner Zweckbestimmung dient). Die Technische Funktionsfläche umfasst bevorzugt denjenigen Teil der NRF, der für die technischen Anlagen zur Ver- und Entsorgung des Bauwerks dient. Wenn bspw. die Unterbringung betriebstechnischer Anlagen zur Versorgung anderer Bauwerke Zweckbestimmung ist (Bsp. Heizhaus), sind die dafür erforderlichen Grundflächen NUF. Die Module umfassen bevorzugt eine z-Richtung (insbesondere Höhe) bzw. bevorzugt eine Ebene in z-Richtung. So kann vorzugsweise der Rauminhalt ebenfalls ausgewertet werden. Zudem umfassen die Rauminformationen bevorzugt Größen, welche die Qualität der Räume in Bezug auf Möblierbarkeit (z.B. Einhaltung von Abstandsflächen und Bewegungsflächen) innerhalb eines im Vorfeld definierten Spektrums einteilen. Die Summe der Raumqualitäten in der Wohnung, der Erschließung und im gesamten Gebäude befähigt bevorzugt Anwender beim Bedienen der Lösung, in frühen Stadien, die Räumliche/Planerische Qualität zu erkennen.

Die Module umfassen bevorzugt des Weiteren Restriktionen. Restriktionen sind vorzugsweise Linien, welche z. B. als Begrenzung für bestimmte Bereiche bzw. Bauteile festgelegt sind und bspw. die als Parameter im Verfahren dienen, z. B. für den Lösungsprozess im Algorithmus. Restriktionen können z. B. Flächen und/oder Konturen eines Raumes, einer Wohnung, einer Erschließung, eines Geschosses und/oder eines Gebäudes sein, die für bestimmte Funktionen vorgesehen sind, wie z. B. Flächen für Belichtung, für die Erschließung, für Brandwände etc. (z. B. Flächen für Zirkulation, Belichtung oder geschlossene Wände). Restriktionen sind z. B. an den Referenzebenen, insbesondere einer CAD-Bauteilfamilie ausgerichtet. Restriktionen bzw. Restriktionselemente basieren vorteilhafterweise auf demselben Grundprinzip wie alle Module und können bevorzugt durch diese in den Abmessungen beeinflusst werden. Die mit Restriktionen belegten Raumflächen sind bei der Berechnung im Algorithmus vorzugsweise als Abhängigkeiten bzw. Beschränkungen festgelegt.

Das Verfahren umfasst die Erstellung und Speicherung einer Wohnungsmatrix für den mindestens einen Wohnungstyp unter Berücksichtigung der Module für den Wohnungstyp, wobei die Wohnungsmatrix alle möglichen Wohnungsgrundrisse und dazugehörige angepasste Module für jeden Grundriss umfasst. Die Wohnungsmatrix kann beispielsweise ausgehend von den technischen Vorgaben, den Parameterbereichen und den Restriktionen der Module alle unter diesen Vorgaben möglichen Wohnungsgrundrisse erstellen. Die Erstellung kann bspw. dadurch effizient limitiert werden, dass die Wohnungsgrundrisse nur innerhalb eines vorgegebenen, diskreten Rastermaßes erstellt werden. Z. B. können alle möglichen Wohnungsgrundrisse innerhalb der Mindest- und Maximalabmessungen erstellt werden, welche in das bevorzugt vorgegebene Rastermaß fallen. Dabei werden die Module vorzugsweise angepasst an die jeweiligen Wohnungsgrundrisse angepasst. Bspw. können Parameterbereiche für das Mindest- und das Maximalmaß wegfallen, da nun für den jeweiligen Grundriss konkrete Maße innerhalb der Parameterbereiche ausgewählt wurden und diese daher nicht mehr benötigt werden. Andere Module werden vorzugsweise nur an die konkrete Realisierung angepasst.

Es können bspw. für die Entwicklung der Grundrissgrößen zunächst ein 12,5 cm x 12, 5 cm Raster festgelegt werden. In Schritten innerhalb dieses Rasters können sich die Wohnungsgrößen vorzugsweise auf der X- und der Y- Achse (der horizontalen Ebene) ausdehnen. Es können bevorzugt ebenfalls bereits bekannte und/oder im Voraus errechnete Grundrisstypen importiert und vorzugsweise an das bevorzugt vorgegebene Rastermaß angepasst werden.

Für die im weiteren Verfahren zugrunde gelegten Wohnungstypen werden die Parameter (Ausprägungen) der Minimal- bzw. Maximalausdehnung (jeweils sowohl in X- als auch Y-Richtung) vorzugsweise ermittelt. Dies erfolgt vorzugsweise automatisiert durch Vergrößerung bzw. Verkleinerung der Grundrisse entlang des Rastermaßes, z. B. im CAD-Programm.

Der zulässige Toleranzbereich für die mögliche Entwicklung der Raumgrößen kann sich vorzugsweise auch an einem bekannten Wohnungsbewertungssystem orientieren. Es können ebenso bzgl. Der Wohnungsabmessungen andere bzw. neue Kriterien zugrunde gelegt werden

Die ermittelten Ausdehnungsparameter und somit alle damit verbundenen Parameter wie Raumgrößen und Raumqualitäten können bevorzugt in Listen innerhalb des CAD-Programms abgebildet werden. Darin sind die Wohnungstypen vorzugsweise in Typen gruppiert und mit ihren Ausdehnungswerten (nach X- und Y-Achsen) erfasst. In der Matrix werden alle Ausprägungen vorzugsweise abgebildet bzw. gespeichert, welche z. B. die vorgegebenen Toleranzbereiche (bspw. minimale bzw. maximale Gesamtgröße) nicht unter- oder überschreiten, den technischen Vorgaben entsprechen etc. Die Ergebnisse werden bevorzugt anschließend in eine Ausprägungstabelle übertragen. Vorzugsweise werden in diesem Dokument die Begriffe Ausprägungstabelle, Ausprägungsmatrix und Wohnungsmatrix synonym verwendet.

Umfasst ist bevorzugt die Erstellung und Speicherung einer Untereinheits-Matrix für den mindestens einen Gebäudeuntereinheitstyp unter Berücksichtigung der Module für die jeweilige Gebäudeuntereinheit, wobei die Untereinheits-Matrix alle möglichen Grundrisse der Gebäudeuntereinheit und dazugehörige angepasste Module für jeden Grundriss umfasst. Die Untereinheitsmatrix ist vorzugsweise eine Möbelmatrix, eine Raummatrix, eine Wohnungsmatrix, eine Erschließungsmatrix und/oder eine Geschossmatrix. Somit ist mit der vorangehend beschriebenen Erstellung und Speicherung einer Untereinheits-Matrix beispielsweise folgendes gemeint:
- Erstellung und Speicherung einer Wohnungs-Matrix für den mindestens einen Wohnungstyp unter Berücksichtigung der Module für den Wohnungstyp, wobei die Wohnungs-Matrix alle möglichen Wohnungsgrundrisse und dazugehörige angepasste Module für jeden Grundriss umfasst,
- Erstellung und Speicherung einer Erschließungs-Matrix für den mindestens einen Erschließungstyp unter Berücksichtigung der Module für den Erschließungstyp, wobei die Erschließungs-Matrix alle möglichen Erschließungsgrundrisse und dazugehörige angepasste Module für jeden Grundriss umfasst,
- Erstellung und Speicherung einer Geschoss-Matrix für den mindestens einen Geschosstyp unter Berücksichtigung der Module für den Geschosstyp, wobei die Geschoss -Matrix alle möglichen Erschließungsgrundrisse und dazugehörige angepasste Module für jeden Grundriss umfasst.

Es können bevorzugt bei der Erstellung, bspw. der Wohnungsmatrix Schwellwertparameter ermittelt bzw. angepasst werden. Diese stehen vorzugsweise in Abhängigkeit zu den Minimal- bzw. Maximalparametern und bestimmen z. B., welchen Abstand (Trenn-) Wände zueinander haben und ab welcher Ausdehnung eines Grundrisses sich (Trenn-) Wände verschieben. Diese Ermittlung bzw. Anpassung von Schwellwertparametern ist bevorzugt durch die von der Wohnungsmatrix umfassten angepassten Module für jeden Grundriss umfasst.

Als weiteres Beispiel können folgende Schritte umfasst sein:
- Erstellung und Speicherung einer Raummatrix für den mindestens einen Raumtyp unter Berücksichtigung der Module für den Raumtyp, wobei die Raummatrix alle möglichen Raumgrundrisse und dazugehörige angepasste Module für die Möbel umfasst und/oder
- Erstellung und Speicherung einer Erschließungsmatrix für den mindestens einen Erschließungstyp unter Berücksichtigung der Module für den Erschließungstyp, wobei die Wohnungsmatrix alle möglichen Erschließungsgrundrisse und dazugehörige angepasste Module für jede Wohnung umfasst und/oder
- Erstellung und Speicherung einer Geschossmatrix für den mindestens einen Geschosstyp unter Berücksichtigung der Module für den Geschosstyp, wobei die Geschossmatrix alle möglichen Geschossgrundrisse und dazugehörige angepasste Module für jede Erschließung umfasst,
- Erstellung und Speicherung einer Gebäudematrix für den mindestens einen Gebäudetyp unter Berücksichtigung der Module für den Gebäudetyp, wobei die Gebäudematrix alle möglichen Gebäudegrundrisse und dazugehörige angepasste Module für jedes Geschoss umfasst.

Bei diesem Beispiel kann auch bevorzugt die Berechnung und Speicherung von möglichen Kombinationen von Erschließungen, Wohnungen und/oder Wohngebäuden unter Berücksichtigung der Erschließungsmatrix des mindestens einen vorgegebenen Erschließungstyps und/oder der Gebäudematrix des mindestens einen vorgegebenen Gebäudetyps vorgenommen werden.

Die Erstellung und Speicherung der Erschließungsmatrix und/oder der Gebäudematrix erfolgt vorzugsweise analog zur Erstellung und Speicherung der anderen Untereinheits-Matrizen, z. B. der Wohnungsmatrix. Liegen Matrizen sowohl für die Wohnungen, Erschließungen; Geschosse und/oder Gebäude vor, umfasst die anschließende Berechnung und Speicherung der möglichen Kombination vorzugsweise eine Art "Matchingprozess" der jeweiligen angepassten Module. So können die Berechnung und Speicherung weiter vereinfacht und effizient gestaltet werden.

Alle möglichen Kombinationen werden vorzugsweise in der Matrix festgehalten und dienen vorteilhafterweise als Grundlage für die Lösungsberechnungen im Algorithmus (der Berechnung und Speicherung von möglichen Kombinationen, s. u.).

Bevor die Berechnung startet werden z. B. alle Wohnungstypen mit deren Ausprägung (Ausdehnungen in X- und Y-Richtung) vorzugsweise initialisiert. Das heißt es wird unter Verwendung eines Skriptes automatisiert die Matrix durch Platzierung und Modifizierung der Module aufgebaut.

Die initialisierten Grundrisse können vorzugsweise jeweils als Textformat in einer JSON-Datei (JavaScript Object Notation - JSON) abgelegt. Die JSON-Dateien sind den Wohnungskategorien vorzugsweise zugeordnet und werden entsprechend benannten Dateiordnern gesammelt. In einer zweiten JSON-Datei können vorzugsweise, je nach Wohnungsausprägung, die zugehörigen, auszuwertenden Parameter erzeugt und ebenfalls angelegt.

Ein möglicher Bauabschnitt (bzw. ein dort zu bauendes Wohngebäude), welcher mit Wohnungen befüllt werden soll, wird vorzugsweise ebenfalls vor einer weiteren Berechnung initialisiert. Die Festlegung der Bauabschnitte, Baufelder und/oder Wohngebäude kann nach Vorgaben des Planers erfolgen. Werden verschiedene mögliche Einteilungen eines Baufeldes vorgegeben, so werden alle zu lösenden Baufelder und/oder Wohngebäude vorzugsweise initialisiert und z. B. als JSON-Datei abgelegt. Ein Baufeld bestimmt bevorzugt die (bebaubare) Fläche des Grundstücks auf der ein Gebäude platziert werden soll. Ein Baufeld kann auf dem Grundstück mehrfach vorhanden sein.

Die Initialisierung von Wohnungen und Bauabschnitten, Baufeldern und/oder Wohngebäuden erfolgt vorzugsweise mittels Modulen. Diese weisen vorteilhafterweise ein sehr geringes Datenvolumen auf, wodurch die Rechenzeit im Initialisierungsprozess vorzugsweise geringgehalten werden kann. Dies ist insbesondere vorteilhaft, da die Wohnungs-, Erschließungs-, Geschoss- und/oder Gebäude-Matrizen je nach Modulkategorie bspw. 10.000 Varianten oder mehr enthalten kann.

Die Initialisierung wird vorzugsweise nur einmalig durchgeführt und kann dann insbesondere für verschiedene Baufelder oder zu bauende Wohngebäude zumindest teilweise (bspw. unter Anpassung der technischen Vorgaben und bautechnischen Größen) übernommen werden. Nur komplett neue Wohnungs-, Erschließungs-, Geschoss- und/oder Gebäude-Typen müssen komplett neu initialisiert werden.

Zuvor definierte Parameter und Bewertungskriterien können in einem Katalog bzw. Grundrissalmanach anschaulich gemacht werden.

Die Speicherung der Matrizen wird vorzugsweise in einem Datenspeicher vorgenommen. Es kann sich dabei bevorzugt um eine Cloud-basierte Datenbank handeln.

Die Berechnung und Speicherung von möglichen Kombinationen von Gebäuden und Gebäudeuntereinheiten umfasst z. B. die Berechnung und Speicherung von möglichen Kombinationen von Gebäuden und Möbeln, Räumen, Wohnungen, Erschließungen und/oder Geschossen.

Umfasst ist weiterhin bevorzugt die Berechnung und Speicherung von möglichen Kombinationen von Erschließungen, Wohnungen und/oder Wohngebäuden unter Berücksichtigung z. B.:
i. der Matrix für den Gebäudetyp und/oder der vorgegebenen Abmessungen des Wohngebäudes,
ii. der Steuerungselemente und/oder Matrix des mindestens einen vorgegebenen Erschließungstyps und/oder
iii. der Wohnungsmatrix und/oder Matrix des mindestens einen vorgegebenen Wohnungstyps,
iv. bevorzugt der Matrix des mindestens einen vorgegebenen Raumtyps,
wobei bautechnische Größen unter gegenseitiger Berücksichtigung der Module bestimmt und/oder angepasst werden. Dies bedeutet bevorzugt, dass die Wohnungen, Erschließungen, Geschosse und/oder Gebäude in den Matrizen herangezogen werden und alle möglichen Kombinationen von Wohngebäuden mit allen möglichen darin enthaltenen Wohnungen und Erschließungen kombiniert werden. Dabei werden die Vorgaben durch die Module des Gebäudetyps, die vorgegeben Abmessungen des geplanten/der geplanten Wohngebäude(s) und/oder die Module der Erschließungen berücksichtigt. Diese geben vorzugsweise die möglichen Kombinationen von Wohnungen, Erschließungen und Wohngebäude(n) vor. Es kommen beispielsweise für ein samt Abmessungen und Modulen vorgegebenes Wohngebäude nur bestimmte Wohnungen der Wohnungsmatrix sowie z. B. nur bestimmte Erschließungen der Erschließungsmatrix aufgrund kompatibler Abmessungen der Wohnungen zu dem Wohngebäude und aufgrund kompatibler Module der Wohnungsmatrix und des Gebäudetyps in Frage. Neben technischen Vorgaben können die Module des Gebäudetyps dabei z. B. Vorgaben und Angaben über die Anzahl und den Typ an 1-Raumwohnungen und 3-Raumwohnungen enthalten, wodurch nur solche Wohnungsgrundrisse und Module in Frage kommen, die diese Vorgaben erfüllen. Diese Vorgaben sind dabei vorzugsweise wiederum in den Modulen der Wohnungsmatrix enthalten. Bautechnische Größen werden dabei vorzugsweise entsprechend angepasst. Diese umfassen beispielsweise finale Werte bezüglich Materialbeschaffenheit von Baustoffen, Wanddicken (Wandstärken) und/oder Raumhöhen für die jeweiligen geplanten Wohngebäude etc. Beispielsweise können Module, welche technische Vorgaben bezüglich Brandschutz und weitere bezüglich in Frage kommender Baumaterialien und ihre Brennbarkeit umfassen, in einer Bestimmung von bestimmten Baumaterialien an bestimmten Stellen der Wohnung/des Wohngebäudes führen, um die technischen Vorgaben bezüglich Brandschutz zu erfüllen.

Es kann bevorzugt sein, dass für Wohngebäude und Erschließungen ebenfalls vorab Matrizen erstellt werden, welche in diesem Prozess zur Anwendung kommen (siehe unten). Ansonsten werden bei der Berechnung alle möglichen Ausführungen von Erschließungen und Gebäuden je nach Vorgaben vorzugsweise mitberechnet.

Weiterhin kann bevorzugt eine visuelle Darstellung wesentlicher Parameter berechneter Wohnungen, Erschließungen und/oder Wohngebäude und/oder die Erstellung eines 3D-Modells mit berechneten Wohnungen, Erschließungen und/oder Wohngebäude umfasst sein.

Der bevorzugte Algorithmus zur Berechnung wird beispielsweise in C# geschrieben. Ziel und Funktion des Algorithmus ist vorzugsweise die Berechnung aller mathematisch möglichen Kombinationen in einem Gebäude (vorzugsweise unter Berücksichtigung der Module) die sich aus den zugrunde liegenden Wohnungstypen und den Erschließungstypen mit ihren jeweiligen Ausprägungen (vorzugsweise durch die Module und/oder Grundrisse vorgegeben). Der Algorithmus wird dabei z. B. durch die in den Modulen hinterlegten Restriktionen begrenzt. Die Kombination aus Wohnungen und Erschließungen mit den jeweiligen Ausprägungen führen bevorzugt zu einem exponentiellen Anstieg der möglichen Lösungen. Alle möglichen Lösungen werden vorzugsweise berechnet, unabhängig davon, ob sie in einer etwaigen, später vorgenommenen Bewertung ausgewählt werden oder entfallen. Je nach gewünschtem Wohnungsmix kann dies bspw. bedeuten, dass all oder nur bestimmte Wohnungen (bzw. Wohnungstypen) bei der Berechnung berücksichtigt werden. Wenn eine Lösung errechnet ist, wird vorzugsweise abgeglichen, welche Ausprägung einer Wohnung in dem Bauabschnitt verwendet werden kann. Für die Auswertung wird diese Datei vorzugsweise mit den ihr zugehörigen Parametern an die Lösung angehängt. Die Dateien werden bspw. als JSON-Dateien in einem Dateiordner gesammelt. Sie sind bevorzugt nach Bauabschnitten jeweils mit den enthaltenen Lösungen und den Dateien ihrer auszuwertenden Parameter sortiert. Zur Visualisierung und Auswertung der Dateien wird das Ergebnis vorzugsweise zusätzlich als CVS-Datei (Comma-separated values Datei) abgelegt.

Die bevorzugte Planungssoftware ist vorzugsweise ein mehrere Planungsprodukte umfassender Technologiezweig von Autodesk für Architekten, Gebäudetechniker und Tragwerksplaner. Revit z. B. basiert bevorzugt nicht auf AutoCAD, sondern enthält einen eigenen Grafikkern. Während z. B. Autodesk, AutoCAD nicht Bauteilorientiert arbeitet, unterstützt Revit bspw. die Technologie BIM (Building Information Modeling). Das Prinzip von Revit besteht vorzugsweise in der Unterstützung sowohl einer 2D- wie auch 3D-Modellierung eines bauteilorientierten Gebäudemodells.

Wenn eine Änderung im Planungsprozess vorgenommen wird, wird sie vorzugsweise auch automatisch im gesamten Projekt ausgeführt, so dass Entwürfe und Dokumentationen vorzugsweise immer konsistent und vollständig bleiben.

Bevorzugt wird folgende Software verwendet: CAD - Software Autodesk Revit mit dem Zusatz der grafischen Programmieroberfläche Dynamo und der Zusatzapplikation Pyrevit, ceapoint Desite, Microsoft Excel, PowerPoint, Word, Outlook, Microsoft Power Bl, Adobe Illustrator, Photoshop, InDesign, RIB iTWO, Microsoft Visual Studio, c# und/oder Dynamo als grafische Programmieroberfläche.

Bevorzugt werden folgende Datei- und Übergabeformate verwendet: rvt, .rte,. rfa, .rft, .dyn, .ifc (Revit), .dwg, .dxf (Autocad, Nemetscheck), .ai, .psd, .indd (Adobe), .json (Austauschformat), .docx, .xlsx, .ppt, .xml, .csv (Microsoft), .dll, .dfn (Programmbibliotheken), .rpz, (RIB iTWO), .pvs, .cpa, .cpixml, .prg.xml (ceapoint Desite).

Als Übergabeformat wird bevorzugt verwendet:
- Dateneingabe 'Wohnmixgenerator': DWG/ RVT zur Modellerstellung (Wohnungen/ Erschließungsgruppen/ Gebäude)
   XLSX zur Einspeisung der Ausprägungsmatrix in Dynamo
- Datenausgabe nach CAD 'Revit' - Erstellung 3D-Modell: Nach dem Datenbankzugriff wird aus Power Bl eine Excel Datei importiert. Diese wird in Dynamo importiert und daraus das Revit Modell erstellt.
- Datenausgabe nach 'Desite MD' - Modellaufbereitung und Auswertung: Dieses wird zur Auswertung als CPIXML an 'Desite MD' übergeben.

Durch das Verfahren kann bspw. eine selbsttätige Erstellung der Wohnungsgrundrisse, auch auf Basis eines Wohnbewertungssystems (z. B. HoWoGe) erstellt werden, z. B. für 2 Raum-, 3-Raum, 4-Raum und 5-Raumwohnungen. Ebenso kann bevorzugt selbsttätig ein Erdgeschoss, ein Dach (z. B. Flachdach) und/oder eine Gründung erstellt werden. Es können bevorzugt selbsttätig Bauteile für Dach, Wand, Boden einschl. Bauteilinformation erstellt werden. Es können außerdem vorzugsweise 3D Gebäudemodelle erstellt und Pläne ausgegeben werden.

Die in einem Gebäudemodell hinterlegten Bauteilinformationen können bevorzugt im Weiteren für die Massenermittlung, die Kalkulation oder die Bauablaufplanung verwendet werden. Die Aufbereitung der im Gebäudemodell hinterlegten Informationen erfolgt in einem weiteren Prozessschritt. Dazu wird das Gebäudemodell über ein Add-on' aus dem CAD-Programm 'Revit' an die Software 'Desite MD' übergeben. 'Desite MD' dient als Zwischenschritt vor Übergabe der Bauteilinformationen an die AVA-Schnittstelle und zugleich zur Sicherung der Modellqualität. Die in 'Desite MD' importierte Geometrie wird über ein dort angelegtes Formular, automatisch einer Qualitäts- / Kollisionsprüfung unterzogen.

Durch das Verfahren können flexibel, effizient und schnell Wohngebäude nach individualisierbaren Vorgaben erstellt werden, welche technischen Anforderungen bezüglich Schallschutzes, Wärmedämmung, Lichteinfall, Brandschutz, Stabilität, Statik, Energieverbrauch etc. erfüllen.

Durch das Computer bzw. netzwerkbasierte Verfahren können alle bezüglich der Module möglichen Realisierungen in kürzester Zeit berechnet werden und auch große Datenmengen verarbeitet werden.

Ein weiteres Ziel ist es bspw. aus dem Prozess Grundrisse, Schnitte und Ansichten entsprechend den Anforderungen der jeweiligen Planungsphase automatisiert zu erstellen. Grundlegende statische Eigenschaften wie maximale Spannweiten und tragende / nichttragende Bauteile wurden bevorzugt in der Entwicklung berücksichtigt und sind bspw. in den Erschließungsmodulen, Steuerungselementen, Modulen und/oder Bauteilen bereits angelegt. Die Dimensionierung z. B. für Geschossdecken, Treppenkerne und Außenwände sind für den Standardfall bevorzugt bereits enthalten (z. B. in den [angepassten] Modulen) bzw. werden berechnet. Dies gilt bevorzugt auch für die Bauteildimensionierung innerhalb der Wohnungen. Die Erstellung der Schal- und Bewehrungspläne erfolgt bevorzugt ebenfalls auf Grundlage des Gebäudemodells, z. B. durch Berücksichtigung der Steuerungselemente.

Auch die automatisierte Beplanung von Grundstücken unter Berücksichtigung stadtplanerischer Aspekte ist bevorzugt im Verfahren umfasst. Diese Aspekte können vorzugsweise in den Modulen umfasst sein.

Eine beispielhafte Ausführungsform der Erfindung umfasst ein Computer- und/oder netzwerkbasiertes Verfahren für eine Planung und/oder einen von mindestens einem Wohngebäude für mindestens einen vorgegebenen Gebäudetyp und/oder vorgegebene Abmessungen des Wohngebäudes,
umfassend mindestens eine Wohnung, mindestens eine Erschließung und ein Gebäude, wobei das Verfahren die folgenden Schritte umfasst:
- Bereitstellung von Modulen fürjeweils
   mindestens einen Gebäudetyp,
   mindestens einen Geschosstyp,
   mindestens einen Erschließungstyp,
   mindestens einen Wohnungstyp und
   mindestens einem Raumtyp
   wobei die jeweiligen Module wesentliche technische Vorgaben, Parameterbereiche für Abmessungen und/oder Restriktionen für den jeweiligen Typ enthalten;
- Erstellung und Speicherung einer Raummatrix für den mindestens einen Raumtyp unter Berücksichtigung der Module für den Raumtyp, wobei die Raummatrix alle möglichen Raumgrundrisse und dazugehörige angepasste Module für jede kompatible Möblierung umfasst,
- Erstellung und Speicherung einer Wohnungsmatrix für den mindestens einen Wohnungstyp unter Berücksichtigung der Module für den Wohnungstyp, wobei die Wohnungsmatrix alle möglichen Wohnungsgrundrisse und dazugehörige angepasste Module für jede kompatiblen Raum umfasst,
- Erstellung und Speicherung einer Erschließungsmatrix für den mindestens einen Erschließungstyp unter Berücksichtigung der Module für den Erschließungstyp, wobei die Erschließungsmatrix alle möglichen Erschließungsgrundrisse und dazugehörige angepasste Module für jede kompatible Wohnung umfasst,
- Erstellung und Speicherung einer Geschossmatrix für den mindestens einen Geschosstyp unter Berücksichtigung der Module für den Geschosstyp, wobei die Geschossmatrix alle möglichen Geschossgrundrisse und dazugehörige angepasste Module für jedes kompatible Erschließung umfasst,
- Berechnung und Speicherung von möglichen Kombinationen von Geschossen, Erschließungen, Wohnungen, Räumen und/oder Wohngebäuden unter Berücksichtigung:
   i. der Module für den Gebäudetyp und/oder der vorgegebenen Abmessungen des Wohngebäudes,
   ii. der Module des mindestens einen vorgegebenen Geschosstyps
   iii. der Module des mindestens einen vorgegebenen Erschließungstyps
   iv. der Module des mindestens einen vorgegebenen Wohnungstyps und/oder
   v. Module des mindestens einen vorgegebenen Raumtyps,
   wobei bautechnische Größen unter gegenseitiger Berücksichtigung der Module bestimmt und/oder angepasst werden und;
- bevorzugt visuelle Darstellung wesentlicher Parameter berechneter Wohnungen, Erschließungen und/oder Wohngebäude und Erstellung eines 3D-Modells berechneter Wohnungen, Erschließungen und/oder Wohngebäude.

In einer bevorzugten Ausführungsform werden bei mehreren Gebäudeuntereinheiten die Berechnung und Speicherung von möglichen Kombinationen von Gebäuden und Gebäudeuntereinheiten schrittweise in einer Reihenfolge von der kleineren zur größeren Untereinheit vorgenommen,
wobei die Kombination der mindestens einen Untereinheit mit dem Gebäude als letztes berechnet wird und
wobei für jede Berechnung jeweils die Berechnung und Speicherung der nächstkleineren Untereinheit berücksichtigt wird. Es handelt sich somit um einen iterativen Prozess, wie er z. B. in der ersten Abbildung beschrieben wird. Die Speicherung kann beispielsweise in jeweils in einer Untereinheits-Lösungs-Matrix erfolgen, welche dann bei dem nächsten Berechnungsschritt herangezogen wird. Somit werden jeweils vorangegangene Berechnungen von Kombinationen von Gebäudeuntereinheiten bei einem Berechnungsschritt einer größeren Gebäudeuntereinheit mitberücksichtigt.

Beispielhaft wird das Verfahren anhand einiger Gebäudeuntereinheiten im Folgenden beschrieben:
- In einem beispielhaften ersten Schritt wird die Raum-Matrix mit mindestens einem Raumtyp, doch bevorzugt mit mehreren Raumtypen, unter Berücksichtigung der Module für den Raumtyp erstellt. Die Raumtypen können dabei bevorzugt bestimmte gewünschte Charakteristika eines Raumes umfassen Die Raum-Matrix umfasst alle möglichen Ausprägungen dieser Raumtypen und somit dazugehörige angepasste Module für jeden Wohnungsgrundriss.
- In einem Schritt wird z. B. die Wohnungs-Matrix mit mindestens einem Wohnungstyp, doch bevorzugt mit mehreren Wohnungstypen, unter Berücksichtigung der Module für den Wohnungstyp erstellt. Die Wohnungstypen können dabei bevorzugt bestimmte gewünschte Charakteristika einer Wohnung umfassen. Die Wohnungs-Matrix umfasst dann alle möglichen Ausprägungen dieser Wohnungstypen und somit dazugehörige angepasste Module für jeden Grundriss.

- Es werden bevorzugt ebenso Matrizen für den Erschließungstyp und den Geschosstyp erstellt.
- In dem darauffolgenden Schritt werden alle möglichen Kombinationen von Wohnungen in der Wohnungs-Matrix und Räumen aus der Raum-Matrix errechnet und in die Wohnungs-Lösungs-Matrix gespeichert. Eine Lösung in dieser Matrix setzt sich aus einer Ausprägung eines Wohnungstypen, aus der Wohnungs-Matrix und den kompatiblen, gemeinsam oder ggf. allein hinein passenden Ausprägungen der Raumtypen aus der Raum-Matrix zusammen.
- So wird das Verfahren dann auf der nächstgrößeren Gebäudeuntereinheitsebene weitergeführt bis schließlich alle Kombination der Gebäudeuntereinheiten und dem Gebäude berechnet und gespeichert sind.

In einer bevorzugten Ausführungsform der Erfindung sind bautechnische Größen ausgesucht aus der Gruppe Spannweite einer Decke, Dicke einer Decke und/oder umfassen die Erfordernis und/oder Positionierung eines Unterzugs,
welche unter Berücksichtigung von Wandaufbauten, Wandstärken, Wandmaterialien Deckenspannweiten, der Positionierung von Brandwänden und/oder der Positionierung von tragenden Wänden berechnet werden.

Die Dicke der Decke kann beispielsweise die Dicke einer Geschoss-Decke sein.

Ein Unterzug ist bevorzugt ein Träger o. ä., der die Last einer Decke, eines Bogens oder einer Wand aufnimmt und auf andere Bauteile ableitet. Die Tragkraft bzw. die Spannweite einer Decke oder eines Bogens können somit durch Verwendung eines Unterzuges erhöht werden.

So können diese entscheidenden bautechnischen Größen vorteilhafterweise bereits in der Planungsphase integriert werden.

In einer weiteren bevorzugten Ausführungsform der Erfindung sind bautechnische Größen ausgesucht aus der Gruppe umfassend Abmessungen und/oder Positionen von:
Untereinheiten und/oder Gebäuden
und/oder
Abmessungen und/oder Position von: Türen, Belichtungsflächen und/oder Fensterfläche, bevorzugt der Gebäude und/oder Untereinheiten.

Z. B. können bautechnische Größen Abmessungen und/oder Positionen von: Wohnungen, Geschossen, Erschließungen und/oder Wohngebäuden umfassen.

So können beispielsweise bautechnische Größen ausgesucht sein aus der Gruppe umfassend Abmessungen und/oder Positionen von:
Wohnungen, Erschließungen und/oder Wohngebäuden
und/oder
Abmessungen und/oder Position von: Türen, Belichtungsflächen und/oder Fensterfläche.

Diese bautechnischen Größen tragen insbesondere vorteilhaft zur Statik, Belichtung und effizienter Wohnraumnutzung bei.

In einer weiteren bevorzugten Ausführungsform der Erfindung umfasst das Verfahren weiterhin folgende Schritte:
- Visuelle Darstellung wesentlicher Parameter berechneter Untereinheiten und/oder Gebäude und/oder Erstellung eines 3D-Modells berechneter Untereinheiten und/oder Gebäude.

Untereinheiten sind z. B. Wohnungen, Erschließungen und/oder Geschosse, Gebäude sind z. B: Wohn- und/oder Bürogebäude

Somit ist z. B. die visuelle Darstellung wesentlicher Parameter berechneter Wohnungen, Erschließungen, Geschosse und/oder Wohngebäude und/oder Erstellung eines 3D-Modells berechneter Wohnungen, Erschließungen und/oder Wohngebäude umfasst.

Z. B. können die o. g. CVS-Dateien mit den gesammelten Lösungen in eine Software zur Visualisierung und Interaktion eingelesen werden. Mit dem Programm können vorteilhafterweise alle Lösungen sichtbar gemacht werden. Die Parameter NUF, VF, TF werden bevorzugt ebenfalls in so einer Software angezeigt und können bspw. Filter für Lösungen (siehe unten) verwendet werden. Die Ergebnisse lassen sich vorzugsweise zwischen Minimal- und Maximalwerten eingrenzen, die Summe der in Frage kommenden Lösungen lassen sich vorteilhafterweise so entsprechend reduzieren. Die errechneten Lösungen können z. B. entweder nach der NUF, VF, TF oder einem flexiblen Zusammenspiel aller drei Flächenarten eingegrenzt /gefiltert visualisiert werden. Die finalen, zu einer Weiterbehandlung bevorzugt ausgewählten bzw. gefilterten Lösungen können vorzugsweise über solch eine Software wieder als CVS-Datei ausgelesen und bevorzugt in ein CAD Programm übertragen werden.

Zur Erstellung eines 3D-Modells kann vorzugsweise die Übertragungen der Lösungen in ein CAD-Programm sowie das Zusammenfügen der geometrischen zum 3D-Modell vollautomatisch oder teilautomatisch erfolgen. Der Aufbau des Modells, welcher vorteilhafterweise mehrere Schritte erfordert, läuft z. B. durch Unterstützung von Skripten automatisch ab. Über die eingelesenen CVS-Dateien kann dem Skript vorzugsweise entnommen werden, welches Baufeld für die Berechnung der Lösung zugrunde gelegt wurde und welche Wohnung(en) bzw. welche Erschließungsgruppe in einer Lösung verwendet wurden. Über ein bevorzugtes Auslesen der JSON-/CVS-Dateien werden dem Skript bevorzugt automatisch die der Lösung zugehörigen Module mit ihren definierten Ausprägungen entnommen, bevorzugt in das CAD Programm (z. B. Revit) importiert und bevorzugt auf der entsprechenden Grundrissebene automatisch platziert. Die bevorzugten Module für das Dach und die Gründung werden vorzugsweise separat berechnet und vorteilhafterweise auf den entsprechenden Grundrissebenen automatisch ergänzt. Ab diesem Zeitpunkt ist das Gebäude (Grundrisse) von einem Planer beurteilbar, da sich nun ein 2.5D Gebäude aufgebaut hat. Ein weiteres Skript analysiert und interpretiert vorzugsweise die Module, weist insbesondere den Modulen die entsprechenden Systemfamilien bzw. Bauteile aus dem CAD-Programm zu und platziert diese vorzugsweise, bevorzugt vorgegeben durch die Module, auf den entsprechenden Grundrissebenen. Das so generierte Gebäudemodell beinhaltet bereits alle Informationen, die zur Erstellung von Planunterlagen bevorzugt erforderlich sind, wie z. B. Geschossdecken mit Fußbodenaufbauten, Wände mit Fenstern und Türen, Räume, Fassadenbekleidungen etc. Beschriftungen und Maßketten sind vorzugsweise über das CAD-Programm einzupflegen und/oder werden automatisch eingepflegt.

Das Verfahren kann beispielsweise auf BIM-fähige Software und AVA beruhen. Bevorzugt liegt dem Verfahren darüber hinaus ein speziell programmierter Algorithmus zugrunde, welche bevorzugt über eine eigens entwickelte Prozesskette auf eine Datenbank zugreift. Die im Entwicklungsprozess aufzubauende Datenbank kann z. B. eine Vielzahl möglicher Ausprägungen von Wohnungs-, Erschließungs- und Gebäudetypen aufweisen und deren Kombination untereinander ermöglichen. So können vorteilhafterweise aus der Vielzahl von Kombinationsmöglichkeiten die geeigneten Erschließungsformen, Wohnungsgrundrisse sowie der angestrebte Wohnungsmix eines Wohngebäudes (z. B: Geschosswohnungsbau) auf einer gegebenen und geeigneten Grundstücksfläche generiert werden.

In einer weiteren bevorzugten Ausführungsform der Erfindung umfasst die Gebäudeuntereinheit mindestens eine Erschließung, ein Geschoss, eine Wohnung, einen Raum und/oder ein Möbel.

In einer weiteren bevorzugten Ausführungsform der Erfindung werden die möglichen Kombinationen in einer Graphdatenbank abgespeichert, welche Abfragen in Bezug auf beliebige Kombinationen von Untereinheitstypen, Abmessungen des Gebäudes und/oder bautechnischer Größen erlaubt und geeignete Kombinationen ausgeben kann.

Abmessungen des Gebäudes sind insbesondere Abmessungen des Wohngebäudes.

Somit werden beispielsweise die möglichen Kombinationen in einer Graphdatenbank abgespeichert, welche Abfragen in Bezug auf beliebige Kombinationen von Wohnungstypen, Erschließungstypen, Geschosstypen Gebäudetypen, Abmessungen des Wohngebäudes und/oder bautechnischer Größen erlaubt und geeignete Kombinationen ausgeben kann.

Eine Graphdatenbank (oder graphenorientierte Datenbank) ist bevorzugt eine Datenbank, die Graphen verwendet, um stark vernetzte Informationen aufzubereiten zu speichern. Ein Graph umfasst bevorzugt Knoten und Kanten, den Verbindungen zwischen den Knoten. Bevorzugte Konzepte für Graphdatenbanken sind das Resource Description Framework (RDF) und Labeled-Property Graph (LPG).

In einem Labeled-Property-Graph oder einfach Property-Graph besitzen bevorzugt sowohl Knoten als auch Kanten Eigenschaften, auch Properties genannt (z. B. Gewicht: 12 kg, Farbe: Blau, Name: Charlie).

Im RDF (Resource Description Framework) werden Graphen vorzugsweise unter Verwendung von Triples und Quads modelliert. Triples umfassen bevorzugt drei Elemente in der Form Knoten-Kante-Knoten, welche einen komplexen Graphen darstellen. Quads erweitern Triples bevorzugt um darüberhinausgehende Kontextinformationen, wodurch Triples vorteilhafterweise einfacher in Gruppen zusammengefasst werden können.

Graphdatenbanken bieten vorzugsweise eine Reihe von spezialisierten Graphalgorithmen, um komplizierte Datenbankabfragen zu vereinfachen. So bieten sie beispielsweise Algorithmen, um Muster zu finden (Graph Pattern), Graphen zu traversieren, d. h. alle direkten und indirekten Nachbarn eines Knotens zu finden, kürzeste Pfade zwischen zwei Knoten zu berechnen, bekannte Graphstrukturen wie beispielsweise Cliquen zu finden oder Hotspots besonders stark vernetzter Regionen im Graph zu identifizieren.

Beispielsweise werden die gespeicherten CSV-Dateien in eine Graph-Datenbank abgelegt. Die Graph-Datenbank kann stark vernetzte Datenstrukturen abbilden und die Abhängigkeit unter den Daten grafisch sichtbar machen. Der Vorteil gegenüber einer relationalen Datenbank ist insbesondere die Pflege der hinterlegten Dateien und der Datenbank selbst. Kommen im Laufe der Berechnungen weitere Parameter, Bewertungskriterien oder neue Grundrissvarianten für die Berechnung einer Gesamtlösung hinzu, können die geänderten Daten vorteilhafterweise einfach der Graph-Datenbank hinzugefügt werden. Anpassungen von Tabellen, Zeilen & Verknüpfungen müssen im Gegensatz zu einer relationalen Datenbank vorteilhafterweise nicht aktualisiert werden. Bestehende Verbindungen & IDs bleiben in der Graph-Datenbank bevorzugt vorhanden und werden lediglich um neue Informationen ergänzt. So können auch Analyse/Bewertungskriterien von Fremdkunden vorzugsweise einfach an die Graph-Datenbank angehängt werden. So können z. B. fallspezifisch immer wieder neue Analysen und Abfragen der Datenbank erfolgen ohne, dass diese Daten im Vorfeld immer wieder komplett neu generiert werden müssen.

Zudem bietet die Graph-Datenbank bevorzugt eine flexible Abfragetiefe. So können einfache Abfragen gestellt werden, wie z.B. wie viele Lösungen eines Gesamtgebäudes gibt es mit einer rechteckigen 2-Raumwohnungen und 3 4-Raumwohnungen. Darüber hinaus kann diese Abfrage aber auch in vielen Stufen erfolgen, wie z.B.: wie viele Lösungen eines Gesamtgebäudes gibt es mit einer rechteckigen 2-Raumwohnungen und 3 4-Raumwohnungen, von denen 2 der 4-Raumwohnugnen ein Duschbad haben und eine 4-Raumwohnung ein Wannenbad hat. Und der Qualitätsfaktor für die 2-Raumwohnung min. 0,92 beträgt. (Der Qualitätsfaktor gibt an wie gut die Wohnung den Bewertungskriterien der Howoge entspricht, siehe unten. Die Bewertungskriterien können allerdings angepasst werden. Die Howoge-Kriterien dienen lediglich als Beispiel.)

In einer weiteren bevorzugten Ausführungsform der Erfindung umfasst die Untereinheits- Matrix mindestens einen Schwellenwertparameter, der einzuhaltende Abstände von Wänden und/oder Schwellenwerte von Ausdehnungen des Untereinheitsgrundrisses in x- und/oder y-Richtung umfassen, ab denen eine Verschiebung von Wänden stattfindet.

Die Untereinheit kann z. B. eine Wohnung sein. Somit umfasst beispielsweise die Wohnungsmatrix und/oder die Module für mindestens einen Wohnungstyp mindestens einen Schwellenwertparameter, der einzuhaltende Abstände von Wänden und Schwellenwerte von Ausdehnungen des Wohnungsgrundrisses in x- und/oder y-Richtung umfasst, ab denen eine Verschiebung von Wänden stattfindet.

Insbesondere können dadurch bei der Erstellung der Wohnungsmatrix und/oder Berechnung und Speicherung von möglichen Kombinationen von Erschließungen, Wohnungen und/oder Wohngebäuden sehr einfach Wohnungsgrundrisse gestaltet werden, welche tatsächlichen Wohnbedürfnissen entsprechen.

In einer weiteren bevorzugten Ausführungsform der Erfindung umfasst bautechnische Größen die Positionierung einer Wohnungstrennwand zwischen zwei Wohnungen und/oder die Positionierung einer Außenwand an einer Wohnungsgebäudeaußenfläche,
wobei die Außenwand bevorzugt in Abhängigkeit der Module als normale Außenwand mit Belichtungsflächen oder als geschlossene Brandwand gestaltet sein kann.

So können insbesondere Vorgaben bezüglich Belichtungsflächen und/oder Brandschutz einfach umgesetzt werden.

In einer weiteren bevorzugten Ausführungsform der Erfindung umfassen die Module des Wohnungstyps Elemente ausgesucht aus der Gruppe:
Informationen, Parameter und/oder Restriktionen zum Grundriss der Wohnung; Informationen,
Parameter und/oder Restriktionen zu einer Ausrichtung und/oder Position von Innenwänden in Abhängigkeit vom Grundriss; Informationen, Parameter und/oder Restriktionen zu einer Belichtungsfläche von Räumen; Informationen, Parameter und/oder Restriktionen zu einer Größe von Türen und/oder einem Abstand von Rohbauöffnungen zu angrenzenden Wänden; Informationen,
Parameter und/oder Restriktionen zu einer Schachtabmessung und/oder einer Fensterflächen und/oder Vorgaben für eine Flächenauswertungen nach DIN 277.

So können bei der Erstellung der Wohnungsmatrix und/oder Berechnung und Speicherung von möglichen Kombinationen von Erschließungen, Wohnungen und/oder Wohngebäuden die entsprechenden Größen besonders einfach und effizient im Planungsprozess berücksichtigt und umgesetzt werden, ohne dass diese für jeden erstellten Entwurf gesondert eingegeben oder korrigiert werden müssen. Dadurch können vorteilhafterweise bestimmte Ideen und Vorgaben, die bspw. grundsätzlich oder für einen bestimmten Wohnungs- oder Gebäudetyp gelten sollen, bei der automatisierten Erstellung der Entwürfe berücksichtigt werden, gleichsam können die Entwürfe individuell gestaltet sein.

In einer weiteren bevorzugten Ausführungsform der Erfindung umfassen die Module des Gebäudetyps Abmessungen, Außenwandaufbauten, Außenwandtypen, Dachtypen und/oder Kellertypen.

Dadurch können diese Vorgaben automatisiert umgesetzt werden, ohne für jeden Entwurf einzeln vorgegeben oder im Nachhinein angepasst werden müssen.

In einer weiteren bevorzugten Ausführungsform der Erfindung werden bei der Erstellung der Untereinheits-Matrix die möglichen Untereinheitsgrundrisse durch Variation innerhalb eines vorgegeben Rastermaßes erzeugt, welches vorzugsweise 12,5 cm beträgt.

Z. B. werden bei der Erstellung der Wohnungsmatrix die möglichen Wohnungsgrundrisse durch Variation innerhalb eines vorgegeben Rastermaßes erzeugt, welches vorzugsweise 12,5 cm beträgt.

Dieses Rastermaß hat sich als besonders vorteilhaft für das Verfahren erwiesen, insbesondere ergibt sich hieraus ein hohes Maß an Individualität und Flexibilität bezüglich der Grundrisse, ohne dass eine lange Rechenzeit bei der Durchführung des Verfahrens benötigt wird und/oder eine zu große Anzahl an Entwürfen erstellt wird, welche den Anwender überfordern könnte.

In einer weiteren bevorzugten Ausführungsform der Erfindung umfasst die Wohnungsmatrix für jeden erzeugten Wohnungsgrundriss einen Flächenkennwert nach DIN 277 und/oder zukünftig nachfolgende DINs.

Somit können vorteilhafterweise individualisierbare und gleichzeitig verfahrensübergreifend vergleichbare Entwürfe erstellt werden.

In einer weiteren bevorzugten Ausführungsform der Erfindung umfasst das Verfahren weiterhin folgende Schritte:
- Erstellung eines Bewertungskatalogs für Wohnungsgrundrisse;
- Bewertung jedes in der Wohnungsmatrix erstellten Wohnungsgrundrisses anhand des Bewertungskatalogs;
- Bevorzugt Auswahl von geeigneten Wohnungen aus den Wohnungsgrundrissen anhand der Bewertungen.

Bevorzugt werden in dem Bewertungskatalog eine Liste mit Bewertungskriterien, umfassend mindestens ein Bewertungskriterium, aufgestellt. Bevorzugt werden dann die Wohnungsgrundrisse und/oder die (bevorzugt angepassten) Module mit den Bewertungskriterien verglichen und eine Bewertung vollzogen. Vorteilhafterweise fällt die Bewertung positiver aus, umso geringer die Diskrepanz zwischen den Bewertungskriterien und den Wohnungsgrundrissen und/oder den Modulen. Es kann ebenso im Bewertungskatalog eine Liste mit allen möglichen Werten der Wohnungsgrundrisse und/oder der Steuerungselemente umfasst sein, welche für jeden Wert eine entsprechende Punktzahl für die Bewertung umfasst. Vorteilhafterweise entspricht eine höhere Punktzahl einer besseren Bewertung, es kann ebenso bevorzugt sein, dass eine geringere Punktzahl einer besseren Bewertung entspricht. Eine Auswahl anhand der Bewertung entspricht bevorzugt einer Auswahl aufgrund einer guten bzw. besseren Bewertung. Dabei kann vorteilhafterweise eine Rangliste anhand der Bewertungen erstellt werden und die Auswahl entsprechend der Rangliste getätigt werden. Die Bewertungskriterien können technische Größe wie z. B. Brandschutz umfassen, insbesondere technische Vorgaben und/oder bautechnische Größen, jedoch auch Größen, welche vornehmlich mit dem Wohnkomfort zusammenhängen, wie z. B. Platzangebot, Lichteinfall, (nutzbare) Wohnfläche etc. Es können vorzugsweise ebenso bereits bekannte Bewertungskriterien herangezogen werden, wie z. B. von der HoWoGe.

Die Gesamtbewertungen eines Wohnungsgrundrisses setzt sich bevorzugt aus (Teil-) Bewertungen der in ihr enthaltenen Räume zusammen. Die Bewertung wird z. B. gemäß der vorab im Katalog festgelegten Regeln vorgenommen. Die Regeln können vorzugsweise vorab abgestimmt und/oder festgelegt werden. Je nach Datenbankabfrage können sich bevorzugt unterschiedliche beste Lösungen ergeben.

Bei der Bewertung wird bevorzugt die spätere Platzierung der Wohnung im Gebäude außer Acht gelassen (z. B. der Anschluss an die Erschließung), damit bei der Einspeisung neuer Grundriss- oder Erschließungstypen bevorzugt von einer optimalen Ausgangslage ausgegangen wird, um die Bewertung im Vorfeld nicht zu verzerren.

Im Folgenden sind beispielhaft einige Ausführungsformen von Bewertungskriterien, insbesondere bzgl. Des Wohnkomforts aufgeführt. Diese sind jedoch regelrecht beispielhaft zu verstehen. Z. B. kann der HoWoGe Bewertungskatalog Basis für die Bewertung sein.

### Infragestellung der (im HoWoGe-Katalog) definierten Standards:

In begründeten Fällen kann davon bevorzugt abgewichen werden.
1. (Kinder)Zimmer sind in ihrer Dimensionierung dem Schlafzimmer untergeordnet. Hier sollte die Nutzung der Räume hinterfragt werden und überlegt werden, ob die Hierarchie nicht andersherum sein sollte.
2. Die Küchen befinden sich in den am wenigsten belichteten Bereichen. Hier sollte hinterfragt werden wieviel Licht einzelne Nutzungsbereiche benötigen und ob z.B. ein Sofa im gering belichteten Bereich richtig wäre.
3. Sollte es für den Fernseher ein Möbel mit den zugehörigen Modulgrößen im Wohnzimmer geben oder ist das Vorhalten einer Wandfläche sinnvoller (Wandmontage)? Diese könnte z.B. auch im Schlafzimmer sein.
4. Ist der Kleiderschrank auch als (Einbau)möbel im Flur denkbar? Und kann man dadurch die Fläche im Schlafzimmer reduzieren?

### Mögliche Bewertungskriterien zur objektiven Betrachtung der einzelnen Räume:

In der Bewertung könnten Funktionsstaffelungen berücksichtigt werden, um die Raum- und Möblierungsqualität zu beurteilen. (Besonders bezogen auf die Wohnküche)

Bei Räumen könnte die Anzahl der Ecken ermittelt werden. So bekommt man einen Eindruck ob der Raum verwinkelt ist. Inwieweit dies die Qualität positiv oder negativ beeinflusst muss noch bewertet werden (Schranknischen).)

### Anmerkungen zu Grundrissabhängigkeiten:

### Küchenmöblierung:

Der HoWoGe-Katalog sieht vor, dass Küchen (auch in L-Form) immer mit einer rechteckigen Bewegungsfläche, welche den Bereich zwischen den beiden Schenkeln des Ls voll ausfüllt, ausgestattet sind. Dahinter steckt möglicherweise die Überlegung, dass in denselben Bereich auch eine zweizeilige Küche stehen könnte. Dies schränkt die Möblierung massiv ein. Deshalb ist zu prüfen und zu entscheiden ob von dieser Vorgabe abgewichen wird.

### Flurflächen:

Es muss geklärt werden, ob vom Flur abgehende Durchgänge ohne Tür zur Wohnküche, in der Flächenbetrachtung zum Flur oder den Wohnräumen gezählt werden.

### Badezimmer:

Die Öffnungsrichtung der Türen sind entwurfsabhängig. Hierzu gibt es keine bindende Vorgabe. In einer weiteren bevorzugten Ausführungsform der Erfindung werden Steuerungselemente, Wohnungsmatrix, die möglichen Kombinationen von Erschließungen und Wohnungen und/oder bautechnische Größen in Form einer JSON-Datei und/oder CSV-Datei abgespeichert.

### Regelkatalog

Ziel der Grundrissbewertung ist es, eine Sortierung der Ergebnisse des Generators vorzunehmen. Hierzu werden Regeln aufgestellt, die es ermöglichen Grundrisse objektiv (und maschinenlesbar) auszuwerten. Diese Regeln können sich gegenseitig beeinflussen und ggf. auch ausschließen. Hierzu muss eine Gewichtung der Regeln vorgenommen werden. Diese ist nicht universell, sondern kann je nach Projektziel variieren.

Bewertet werden jeweils die Räume und nicht ganze Wohnungen. Die Bewertung der Wohnung entsteht aus der Summe ihrer Räume.

Die Regeln werden gemäß folgender Reihenfolge definiert:
1. Nutzungsunabhänige Regeln:
   Diese Regeln gelten für alle Räume.
2. Nutzungsspezifische Regeln:
   Diese Regeln unterscheiden nach der Raumnutzung.
3. Sonderregeln:
   _Diese Regeln werden auf die Räume in der jeweiligen Wohnungskonfiguration zugeschnitten. In dieser Weise gliedert sich auch der Katalog.

### Nutzungsunabhängige Regeln:

1. Räume sollen so klein wie möglich sein. (unter Beachtung der folgenden Regeln) Die Minimal- und Maximalgrößen dürfen dabei allerdings nicht unter- bzw. überschritten werden.
2.. Räume sollen mit den Möbelmodulen bestückt sein, die durch den HoWoGe-Katalog vorgegeben sind. Hier dürfen sich nur die Bewegungsflächen überlagern.
3. Spannweiten über 6,5m sollen, für eine optimierte Bauweise, nicht überschritten werden. Es besteht aber die Möglichkeit mit größeren Spannweiten zu arbeiten und die Bauweise dementsprechend anzupassen.
4. Eine ausreichende Belichtung muss gewährleistet sein.
5. Türen sollen beidseitig einen Anschlag von 12,5cm haben, um die Einbaubarkeit zu gewährleisten.
6. Möbel sollten die Fenster nicht einschränken. Das heißt, dass sowohl das Licht ungehindert in den Raum dringen sollte aber auch, dass die Fenster uneingeschränkt zu öffnen sind. Daraus folgt, dass vor bodentiefen Fenstern generell keine Möbel stehen, vor Fenstern mit Brüstung nur Möbel welche nicht höher als die Brüstungshöhe sind.

Weitere Beispiele für nutzungsspezifische Regeln werden untenstehend in Bezug auf einige Abbildungen ausgeführt.

Die vorstehend beschriebene Ausführungsform hat insbesondere den Vorteil eine bevorzugt (teil-) automatisierten Auswahl von Wohnungsgrundrissen aufgrund vorgegebener Kriterien. So kann die Auswahleffizienz aus einer bevorzugt großen Zahl an Grundrissen verbessert werden.

In einer weiteren bevorzugten Ausführungsform der Erfindung werden Module, Untereinheits-Matrizen und/oder bautechnische Größen in Form einer JSON-Datei und/oder CSV-Datei abgespeichert.

Diese Dateiformate lassen sich besonders leicht und effizient handhaben, benötigen eine geringe Speicherkapazität und sind besonders kompatibel für eine Vielzahl von Plattformen bzw. Software- und Hardwarelösungen.

In einer weiteren bevorzugten Ausführungsform der Erfindung werden von einer CAD Programmkomponente Module, Untereinheits-Matrix, die möglichen Kombinationen von Untereinheiten und/oder bautechnische Größen eingelesen und anhand dieser das 3D-Modell der berechneten Untereinheiten und/oder Gebäude erstellt.

Diese verbesserte Ausführungsform wird obenstehend bereits beschrieben und bietet eine verbesserte Unterstützung beim Entwurf.

In einem weiteren Aspekt betrifft die Erfindung ein Computerprogrammprodukt, welches so angepasst ist, dass es das Verfahren nach einem oder mehreren Ausführungsformen der Beschreibung bzw. Abbildungen ausführt.

Der durchschnittliche Fachmann erkennt, dass technische Merkmale, Definitionen und Vorteile bevorzugter Ausführungsformen des erfindungsgemäßen Verfahrens auch für das erfindungsgemäße Computerprogrammprodukt gelten.

In einer bevorzugten Ausführungsform der Erfindung ist das Computerprogrammprodukt so konfiguriert, dass bei der Ausführung von Programmschritten alle zur Verfügung stehenden Prozessorkerne genutzt werden und/oder eine Verwendung des Arbeitsspeichers an die Größe des Arbeitsspeichers angepasst wird.

Bevorzugt umfasst der programmierte Algorithmus Anweisungen, die definieren, dass die Berechnungen auf mehreren Prozessorkernen ablaufen, falls die Hardware dies hergibt. Außerdem ist vorzugsweise im Code mit einprogrammiert, dass der Arbeitsspeicher nahezu vollständig ausgenutzt werden soll. Eine Vollauslastung kann bevorzugt nie erreicht werden, da ein gewisser Teil immer für das Betriebssystem reserviert ist. Bietet die Hardware z. B. 32 GB Arbeitsspeicher werden diese weitestgehend vollständig ausgenutzt. Erweitert man diesen Arbeitsspeicher, zum Beispiel um weitere 32 GB, werden diese ebenfalls zur Berechnung hinzugezogen. Bevorzugt werden auch bei der Verteilung des Programms auf mehrere (Web-) Server alle zur Verfügung stehenden Prozessorkerne und/oder der Arbeitsspeicher optimal genutzt. Dabei kann vorzugsweise auch während des Verfahrens die Nutzung zwischen den Servern angepasst und optimiert werden, z. B. auch anhand Netzwerkkriterien wie Übertragungsraten zwischen den Servern und/oder (bevorzugt lokale) Netzwerkauslastungen.

In einem weiteren Aspekt betrifft die Erfindung einen computerlesbaren Datenträger, welcher ein in diesem Dokument beschriebenes Computerprogrammprodukt umfasst.

Der durchschnittliche Fachmann erkennt, dass technische Merkmale, Definitionen und Vorteile bevorzugter Ausführungsformen des erfindungsgemäßen Verfahrens und des erfindungsgemäßen Computerprogrammprodukts auch für den erfindungsgemäßen computerlesbaren Datenträger gelten.

Es kann sich bspw. um eine DVD, eine CD und/oder einen USB-Stick handeln. Insbesondere handelt es sich um eine Server-Anwendung, die innerhalb eines Web-Servers gehostet wird und dann in eine Datenbank schreibt/abspeichert. Bevorzugt handelt es sich um eine Graph-Datenbank und/oder eine SQL-Datenbank

### DETAILLIERTE BESCHREIBUNG

Im Folgenden soll die Erfindung an Hand von Beispielen näher erläutert werden, ohne auf diese beschränkt zu sein.

### Kurzbeschreibung der Abbildungen

- **Abb. 1**: Schematische Darstellung des Verfahrens.
- **Abb. 2**: Darstellung von Möbel-Modulen.
- **Abb. 3**: Darstellung einer Ausprägung eines Raum-Modules.
- **Abb. 4**: Darstellung der Raum-Matrix.
- **Abb. 5**: Darstellung einer Ausprägung eines Wohnungs-Modules.
- **Abb. 6**: Darstellung einer Wohnungs-Matrix.
- **Abb. 7**: Darstellung einer Wohnungs-Lösungs-Matrix.
- **Abb. 8**: Darstellung eines Ergebnisses aus der Wohnungs-Lösungs-Matrix.
- **Abb. 9**: Darstellung einer Ausprägung eines Erschließungs-Modules.
- **Abb. 10**: Darstellung einer Erschließungs-Matrix.
- **Abb. 11**: Darstellung einer Erschließungs-Lösungs-Matrix.
- **Abb. 12**: Darstellung eines Ergebnisses aus der Erschließungs-Lösungs-Matrix.
- **Abb. 13**: Darstellung einer Ausprägung eines Geschoss-Moduls.
- **Abb. 14**: Darstellung einer Geschoss-Matrix.
- **Abb. 15**: Darstellung einer Geschoss-Lösungs-Matrix.
- **Abb. 16**: Darstellung eines Ergebnisses aus der Geschoss-Lösungs-Matrix.
- **Abb. 17**: Darstellung der Gebäude-Lösungs-Matrix.
- **Abb. 18**: Darstellung der Oberfläche zur Filterung, Sortierung und Auswahl aus der Gebäude-Lösungs-Matrix.
- **Abb. 19**: Darstellung eines Ergebnisses (das Ausgewählte) aus der Gebäude-Lösungs-Matrix.
- **Abb. 20**: Darstellung des Resultats des Lösung-Imports.
- **Abb. 21**: Darstellung eines automatisch aus den Modulen generierten 3D-Gebäude-Modells.
- **Abb. 22**: Darstellung von automatisch aus dem generierten 3D-Gebäude-Modells generierten Planunterlagen.

### Ausführliche Beschreibung der Abbildungen

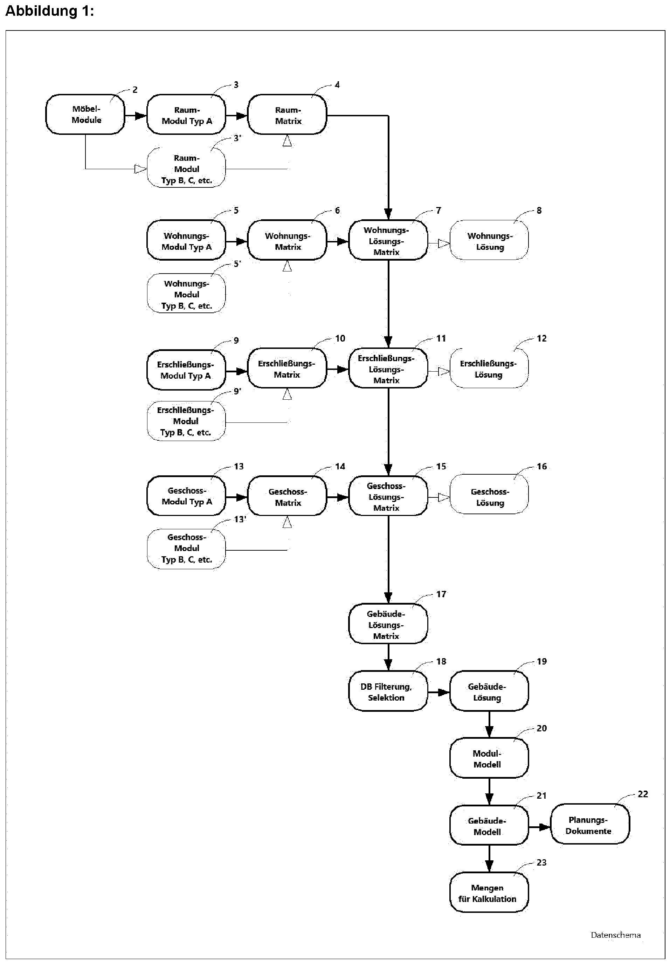

**Abbildung 1** zeigt schematisch und beispielhaft das computer- und/oder netzwerkbasierte Verfahren. Jede mit Bezugszeichen versehene Komponente dieser Abbildung hat eine Nummer als Bezugszeichen, die der Nummer derjenigen folgenden Abbildung entspricht, in welcher diese Komponente im Detail dargestellt wird. Es werden zunächst Module für die Möbeltypen **2,** den Raum Typ A **3** (Typen A, B, C, ... sind beispielhafte Typen eines Raumes), , die Erschließung Typ A 9 (Typen A, B, C, ... sind beispielhafte Typen von Erschließungen) und das Geschoss Typ A 13 (Typen A, B, C, ... sind beispielhafte Typen von Geschossen) bereitgestellt, welche wesentliche technische Vorgaben, Parameterbereiche für Abmessungen und/oder Restriktionen für den jeweiligen Typ enthalten. In einem nächsten Schritt wird die Raum-Matrix **4** mit mindestens einem Raumtyp, doch bevorzugt mit mehreren Raumtypen, unter Berücksichtigung der Module für den Raumtyp A 3 erstellt. Die Raum-Matrix umfasst alle möglichen Ausprägungen dieser Raumtypen und somit dazugehörige angepasste Module für jeden Wohnungsgrundriss.

Die Möbel-Module **2** dienen bevorzugt als Indikator der Qualität einer Raum-Modul-Ausprägung, da bestimmte Räume eine Mindest-Anzahl an bestimmten Möbeln aufnehmen müssen, um die Funktion des Raumes und somit auch die Funktion der Wohnung, der Erschließung, des Geschosses und schlussendlich des Gebäudes zu gewährleisten. "Gut" ist eine Raum-Modul-Ausprägung z.B., wenn die Bewegungsflächen der einzelnen benötigten Möbel-Module **2** sich innerhalb einer Raum-Modul-Ausprägung **3** so stark wie möglich überlappen, sich aber nicht mit den eigentlichen Möbeln überlagern, da es dann zu Einschränkungen kommen könnte.

In einem nächsten Schritt wird die Wohnungs-Matrix **6** mit mindestens einem Wohnungstyp **5,** doch bevorzugt mit mehreren Wohnungstypen, unter Berücksichtigung der Module für den Wohnungstyp **5** erstellt. Die Wohnungs-Matrix umfasst alle möglichen Ausprägungen dieser Wohnungstypen und somit dazugehörige angepasste Module für jeden Grundriss.

Es werden bevorzugt ebenso Matrizen für den Erschließungstyp **9** und den Geschosstyp **13** erstellt.

In dem darauffolgenden Schritt werden alle möglichen Kombinationen von Wohnungen in der Wohnungs-Matrix **6** und Räumen aus der Raum-Matrix **4** errechnet und in die Wohnungs-Lösungs-Matrix **7** gespeichert. Eine Wohnungs-Lösung **8** in dieser Matrix setzt sich aus einer Ausprägung eines Wohnungstypen (z.B. **5**), aus der Wohnungs-Matrix **7** und den kompatiblen, gemeinsam oder ggf. allein hinein passenden Ausprägungen der Raumtypen (z.B. **3**) aus der Raum-Matrix **4** zusammen.

In einem nächsten Schritt werden alle möglichen Kombinationen von Erschließungen in der Erschließungs-Matrix **10** und Wohnungen aus der Wohnungs-Lösungs-Matrix **7** errechnet und in die Erschließungs-Lösungs-Matrix **11** gespeichert. Eine Erschließungs-Lösung **12** in dieser Matrix setzt sich aus einer Ausprägung eines Erschließungstypen (z.B. **9**) aus der Erschließungs-Matrix **10** und den kompatiblen gemeinsam oder ggf. allein hinein passenden Ausprägungen der Wohnungs-Lösungen (z.B. **8**) aus der Wohnungs-Lösungs-Matrix **7** zusammen.

In einem nächsten Schritt werden alle möglichen Kombinationen von Geschossen in der Geschoss-Matrix **14** und Erschließungen aus der Erschließungs-Lösungs-Matrix **11** errechnet und in die Geschoss-Lösungs-Matrix gespeichert **15.** Eine Geschoß-Lösung **16** in dieser Matrix setzt sich aus einer Ausprägung eines Geschosstypen (z.B. **13**) aus der Geschoss-Matrix **14** und den kompatiblen gemeinsam oder ggf. allein hinein passenden Ausprägungen der Erschließungs-Lösungen (z.B. **12**) aus der Erschließungs-Lösungs-Matrix **11** zusammen.

Im darauffolgenden Schritt werden alle möglichen gestapelten Kombinationen der Geschosse untereinander aus der Geschoss-Lösungs-Matrix **15** errechnet (kompatibel in Hinblick auf äußere Abmaße, Schacht- und Treppenhauspositionen) und in die Gebäude-Lösungs-Matrix **17** gespeichert. Eine Gebäude-Lösung **19** in dieser Matrix setzt sich aus mehreren Ausprägung Geschoss-Lösungen (z.B. **16**) aus der Geschoss-Lösungs-Matrix **15** übereinandergestapelt zusammen.

Dabei kann die Geschoss-Matrix **14** (samt Modulen **13**) für den Geschosstyp und/oder die vorgegebenen Abmessungen des Wohngebäudes, die Erschließungs-Matrix **10** (samt Modulen **9**) des mindestens einen vorgegebenen Erschließungstyps und/oder die Wohnungs-Matrix **6** (samt Modulen **5**) des mindestens einen vorgegebenen Wohnungstyps berücksichtigt werden und bautechnische Größen unter gegenseitiger Berücksichtigung der Module bestimmt und/oder angepasst werden. Je nachdem, ob vorher bereits eine Erschließungs-Matrix **10** und/oder eine Geschoss-Matrix **14** passend zu diesen Maßen erstellt wurden, werden die jeweiligen Ausführungen mit einbezogen oder bevorzugt erst an dieser Stelle berechnet.

Im darauffolgenden Schritt wird die Gebäude-Lösungs-Matrix **17** visuell tabellarisch mit wesentlichen aggregierten Parameter berechneter Gebäude-Lösungen (Einbezogen der darin enthaltenen Wohnungen, Erschließungen und/oder Geschosse) dargestellt **18.** In dieser Darstellung **18** ist es möglich, die in der Gebäude-Lösungs-Matrix **17** enthaltenen Lösungen (z.B. **19**) nach bestimmen Werten zu filtern, (z.B. Geschossanzahl, Länge und Breite des Gebäudes, Anzahl der einzelnen Wohnungstypen, Barrierefreiheit der Wohnungen) und diese gefilterten Lösungen auf Basis der Parameter/ Eigenschaften / Merkmale der Gebäude-Lösungen (z.B. nach Flächen-, Qualitäts- und Quantitäts-Werte) zu sortieren und eine Auswahl zu treffen. Diese ausgewählte Gebäude-Lösung **19** (bei Bedarf auch mehrere Lösungen) kann nun an ein CAD-Programm (bevorzugt Autodesk Revit) übergeben und mit Hilfe eines Skriptes als Raum-, Wohnungs-, Erschließungs- und Geschoss Module interpretiert werden **20,** die platziert, ggf. gedreht, gespiegelt und parametrisch eingestellt werden. Diese abstrahierte, nur aus "Linien" bestehende Darstellung ermöglicht es dem Planer die Lösung zu sichten, auf Fehler zu prüfen und subjektiv zu bewerten, bevor man das finale digitale 3D-Gebäude-Modell **20** generiert hat.

Wenn der Planer die Lösung als gut befindet kann im nächsten Schritt mit Hilfe eines Skriptes, auf Basis der Module **20,** bestehend aus einzelnen digitalen Bauteilen (Wände, Decken, Möbel, Türen, Fenster, Treppen, Balkone) das 3D-Gebäudemodell **21** im CAD-Programm generiert.

Darauf wird die Erstellung eines 3D-Modells berechneter Wohnungen, Erschließungen und/oder Wohngebäude vorgenommen.

Basierend auf dem 3D-Gebäude-Modell werden nun die Planansichten und nötigen Listen (Flächenlisten, Stückzahlen) / Daten abgeleitet **22.** Da durch die automatisierte auf Modulen basierende Generierung des 3D-Gebäudemodels eine höhere Genauigkeit und ein höherer Detailgrad erreicht wird als bei dem "manuellen" Modellieren liefert das 3D-Gebäude-Modell schon einen Großteil der zur Kalkulation benötigten Volumen / Mengen **23.**

In den folgenden Abbildungen wird durch die Linien mit stärker gezeichneter Linienstärke die Typen hervorgehoben, auf die in den nachfolgenden Abbildungen genauer eingegangen wird. Abbildungen mit geringeren Linienstärken zeigen weitere Lösungsmöglichkeiten/Ausprägungen.

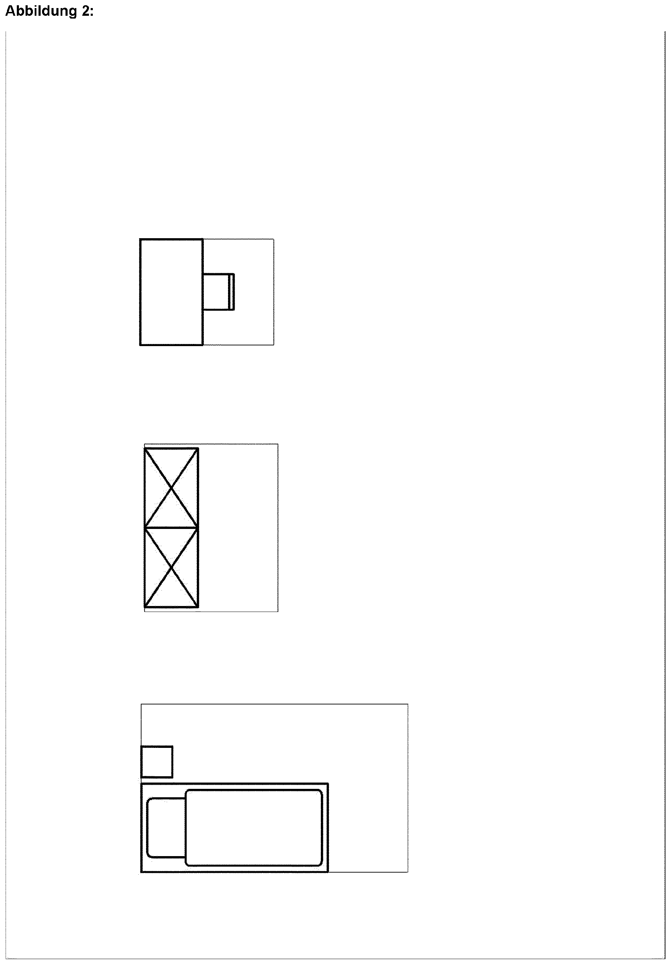

In **Abbildung 2** zeigen die dünneren Linien Bewegungsflächen der einzelnen Möbel. Abbildung 2 stellt eine Auswahl (Einzelbett, Kleiderschrank und Schreibtisch) der Möbel-Module (in 2D) in einem CAD-Programm da. Diese Möbel sind in dieser Anzahl gleichzeitig auch die geforderten Möbel, die mindestens in dem Möbel-Modul Typ A vorhanden sein müssen. Die gestrichelten Bereiche markieren die Bewegungsflächen der Module, die nötig sind, damit die Funktion gewährleistet ist.

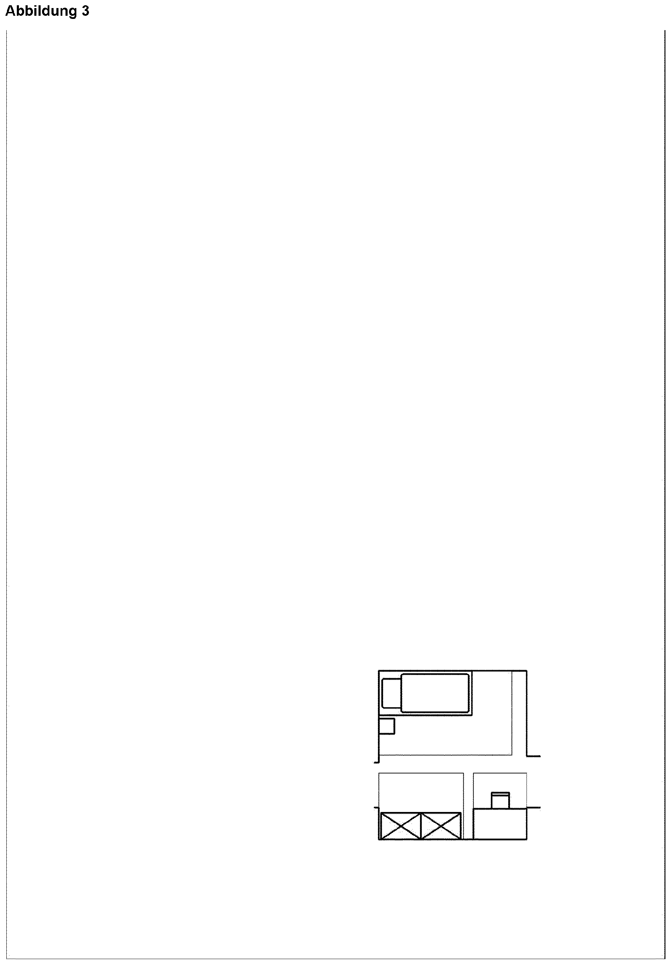

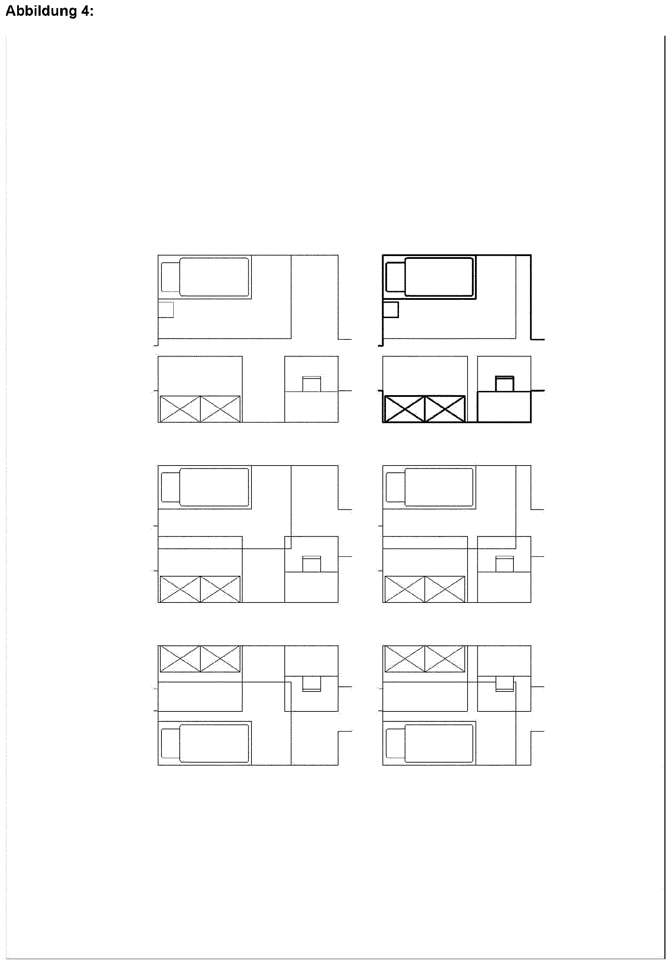

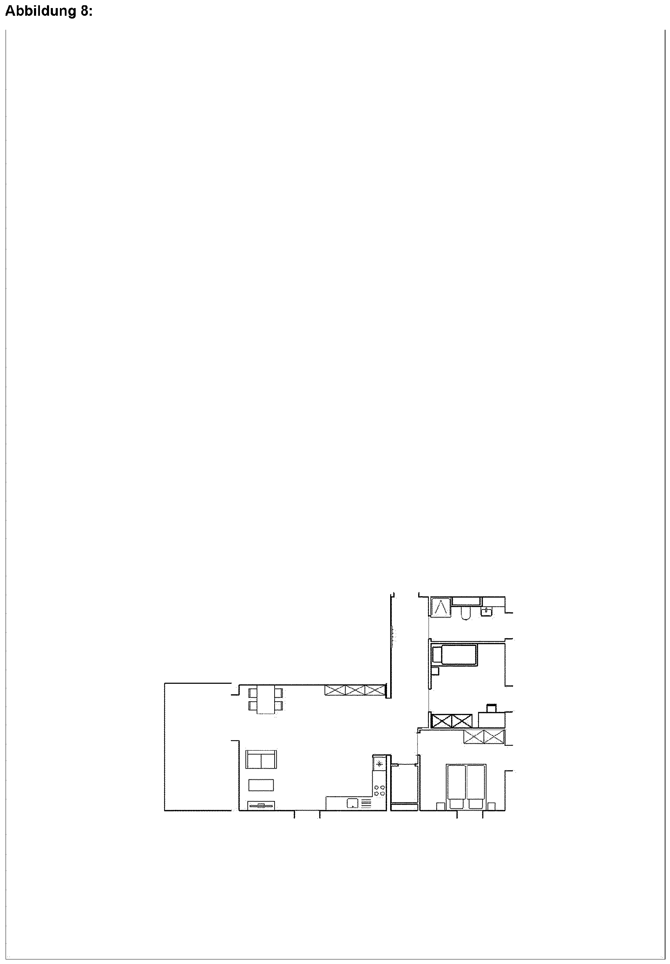

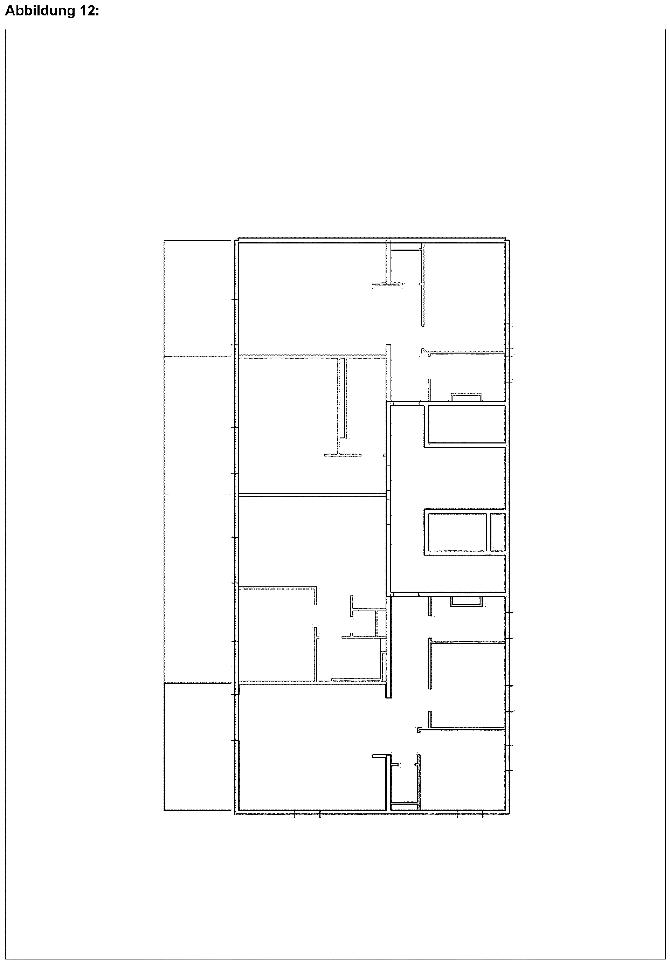

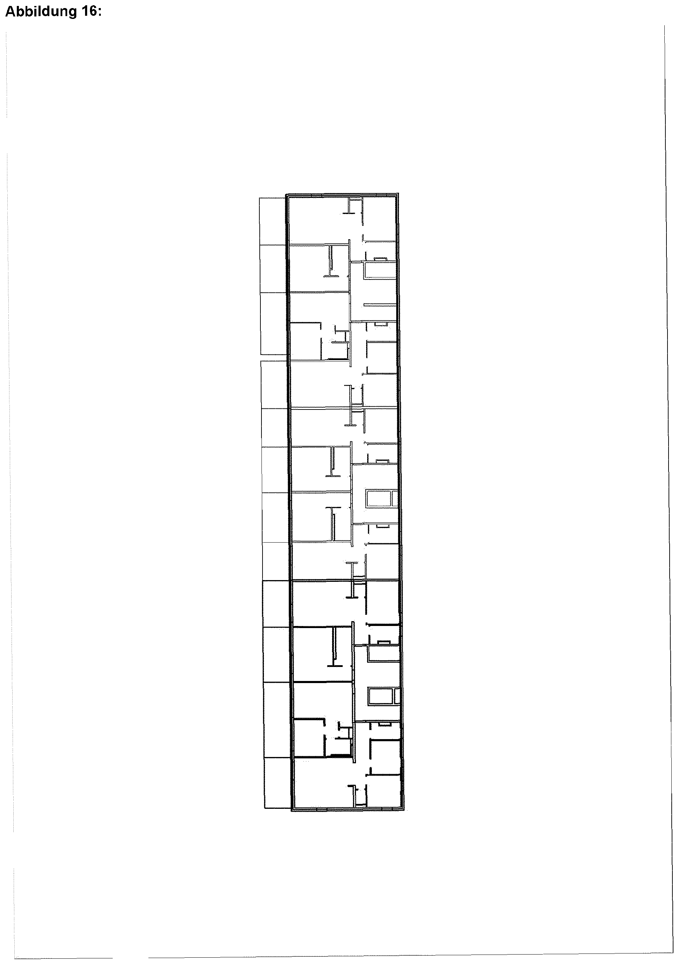

**Abbildung 3** stellt eine Ausprägung des Möbel-Moduls Typ A (hier z. B. Zimmer) (in 2D) in einem CAD-Programm da. Diese beinhaltet die in Abb. 2 dargestellten Möbel-Module. Die Möbel-Module stellen die kleinste Gebäudeuntereinheit im gesamten Prozess dar. Sie bilden auch die Grundeinheit, da sie bestimmen, ob ein Raum funktionsfähig ist. Wenn das Raum-Modul (Abb. 4) nicht die nötigen Möbel fassen kann ist es nicht funktionsfähig. Somit ist die Wohnungs-Lösung (Abb. 8), Erschließungs-Lösung (Abb. 12), Geschoss-Lösung (Abb. 16) und schlussendlich auch die gesamte Gebäudelösung (Abb. 12), in dem es steckt es auch nicht. Es kann in seinen äußeren Abmessungen manipuliert werden und das Innenleben passt sich dem an. Es dient im Prozess der Visualisierung, der Ermittlung der Qualitäten und als Platzhalter für Elemente, die im späteren Verlauf das 3D-Gebäudemodell bilden.
**Abbildung 4** stellt abstrahiert einen Teilausschnitt der Raum-Matrix dar, in der mehrere Ausprägungen des Raum-Moduls Typ A (hier z. B. Zimmer) zu sehen sind. Sie wird zunächst in dem CAD-Programm mit Hilfe eines Skriptes automatisch generiert. Jedes Raum-Modul desselben Typs in dieser Matrix hat andere Maße. Im nächsten Schritt werden die Module analysiert und mit Attributen, wie z.B. Flächenwerte und Qualitäten befüllt. Die Qualität des Raumes wird durch mehrere Faktoren bestimmt. Die Qualität des Raumes steigert sich z.B., wenn sich unter anderem die Bewegungsflächen stärker überlagern, ohne die eigentlichen Möbel zu berühren, sodass die Funktion noch gegeben ist. Danach werden diese Elemente in eine tabellarische form abstrahiert (CSV, TXT o.ä.) und in die Datenbank eingespeist. Diese Methode hat sich bei allen Modul-Arten bewährt, da Module einfach für Planer in dem CAD-Programm (Revit) zu erstellen sind und ihnen da schon eine gewissen Intelligenz eingebaut werden kann (z.B. das der Nachttisch verschwindet, wenn die Tür zu nahe zum Bett ist). Dies kommt dem normalen Planen nahe und gewährleistet so, dass nicht die hier fachfremden Informatiker die Planung übernehmen müssen.

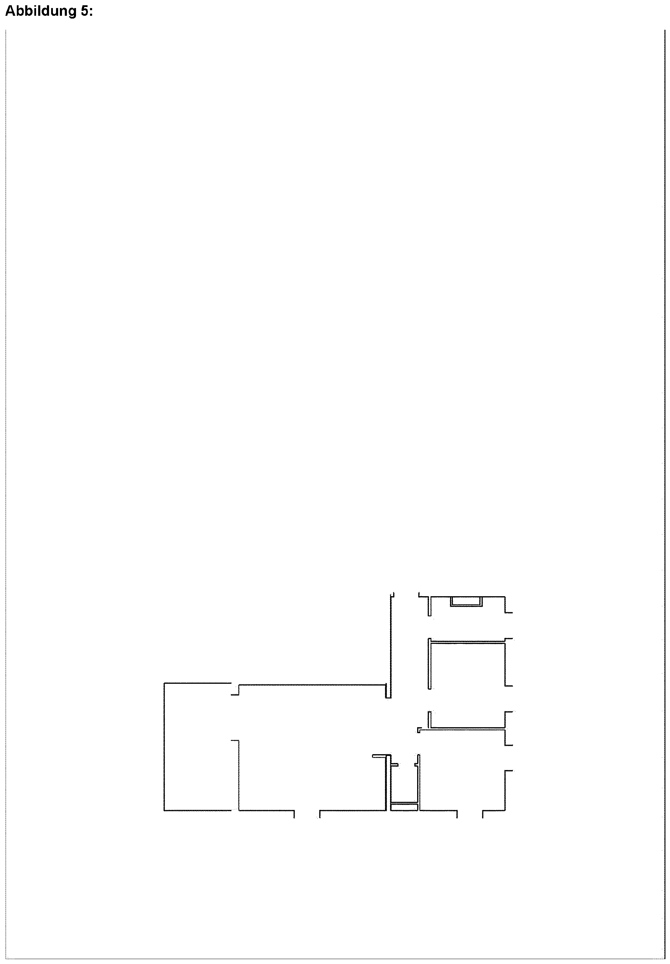

**Abbildung 5** stellt eine Ausprägung des Wohnungs-Moduls Typ A (hier z. B. 3-Raum, L-Form) (in 2D) in einem CAD-Programm da. Es kann in seinen äußeren Abmessungen manipuliert werden und das Innenleben passt sich dem an. Es dient im Prozess der Visualisierung, der Ermittlung der Qualitäten und als Platzhalter für Elemente, die im späteren Verlauf das 3D-Gebäudemodell bilden.

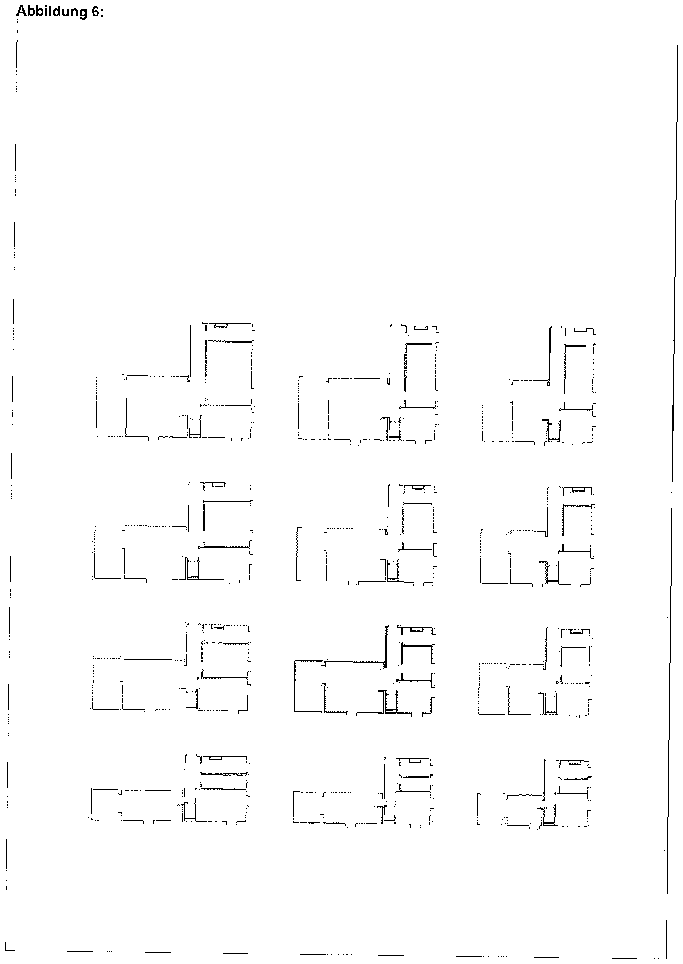

**Abbildung 6** stellt abstrahiert einen Teilausschnitt der Wohnungs-Matrix dar, in der mehrere Ausprägungen des Wohnungs-Moduls Typ A (hier z. B. 3-Raum, L-Form) zu sehen sind. Sie wird zunächst im CAD-Programm mit Hilfe eines Skriptes automatisch generiert. Jedes Wohnungs-Modul desselben Typs in dieser Matrix hat andere Maße. Im nächsten Schritt werden die Module analysiert und mit Attributen befüllt, wie z.B. Flächenwerte und Qualitäten. Danach werden diese Elemente in eine tabellarische Form abstrahiert (CSV, TXT o.ä.) und in die Datenbank eingespeist. Diese Methode hat sich bei allen Modul-Arten bewährt, da Module einfach für Planer in dem CAD-Programm (Revit) zu erstellen sind und ihnen da schon eine gewissen Intelligenz eingebaut werden kann (z.B. dass die Brandwände bei sich ändernden Maßen ihren Abstand wahren und sich die anderen daran orientieren) Dies kommt dem herkömmlichen Planen nahe und gewährleistet so, dass nicht die hier fachfremden Informatiker die Planung übernehmen müssen.

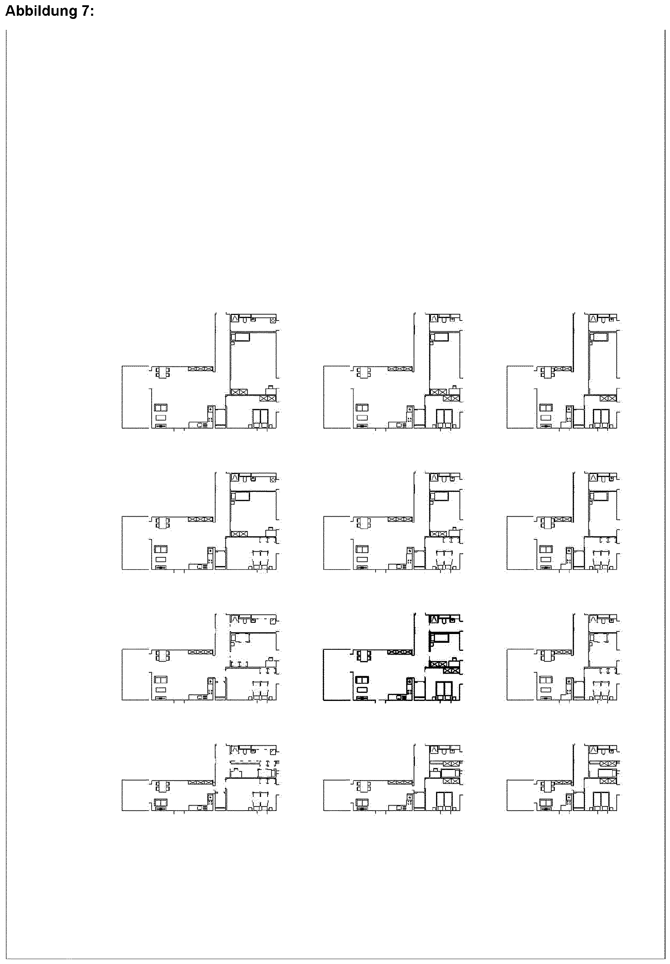

**Abbildung 7** stellt abstrahiert einen Teilausschnitt der Wohnungs-Lösung-Matrix dar, in dem mehrere Ausprägungen der Wohnungs-Lösungen-Moduls auf Basis von Typ A zu sehen sind. Dieser Prozess läuft innerhalb der Datenbank ab und wurde hier nur mit Hilfe der Module im CAD-Programm sichtbar gemacht. Die Methode versucht jede Wohnung in der Wohnungs-Matrix mit den Räumen aus der Raum-Matrix zu befüllen, sofern es die Restriktionen der Module es zulassen. So kann es für eine Wohnungs-Ausprägung mehrere Versionen mit unterschiedlichen Raumkombinationen geben, die voneinander abweichende Merkmale aufweisen.
**Abbildung 8** stellt abstrahiert eine Lösung aus der Wohnungs-Lösung-Matrix dar. Die Qualität der Wohnung ist die Summer der Qualitäten der Raum-Ausprägungen, die in ihr untergebracht sind.

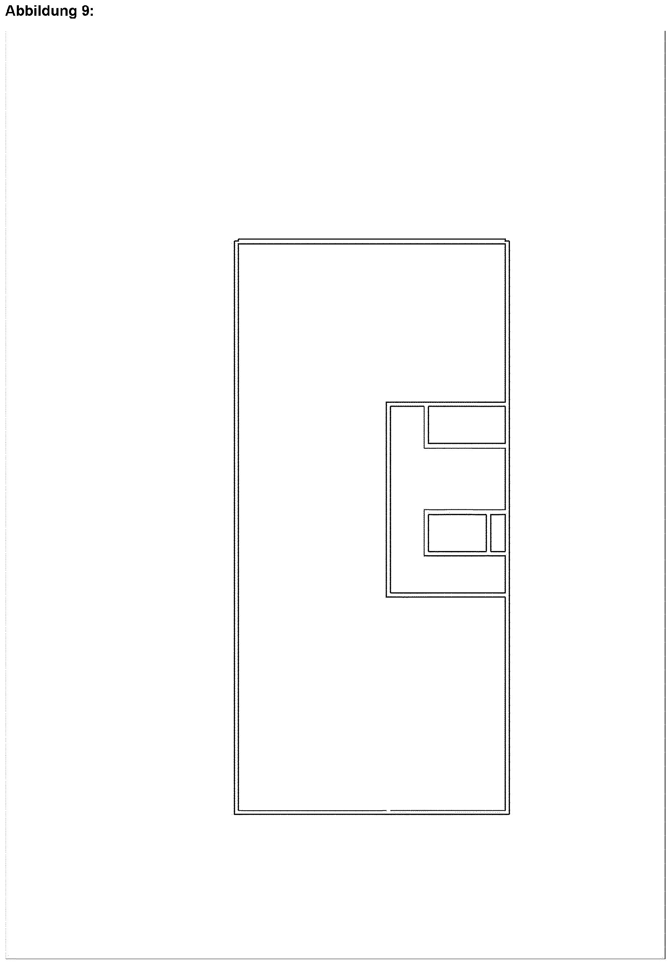

**Abbildung 9** stellt eine Ausprägung des Erschließungs-Moduls Typ A (hier z. B. 4-Spänner, Erdgeschoss, mit Aufzug und Technikraum) (in 2D) in einem CAD-Programm dar in einer Draufsicht dar. Es kann in seinen äußeren Abmessungen manipuliert werden und das Innenleben passt sich dem an. Es dient im Prozess der Visualisierung, der Ermittlung der Qualitäten und als Platzhalter für Elemente, die im späteren Verlauf das 3D-Gebäudemodell bilden.

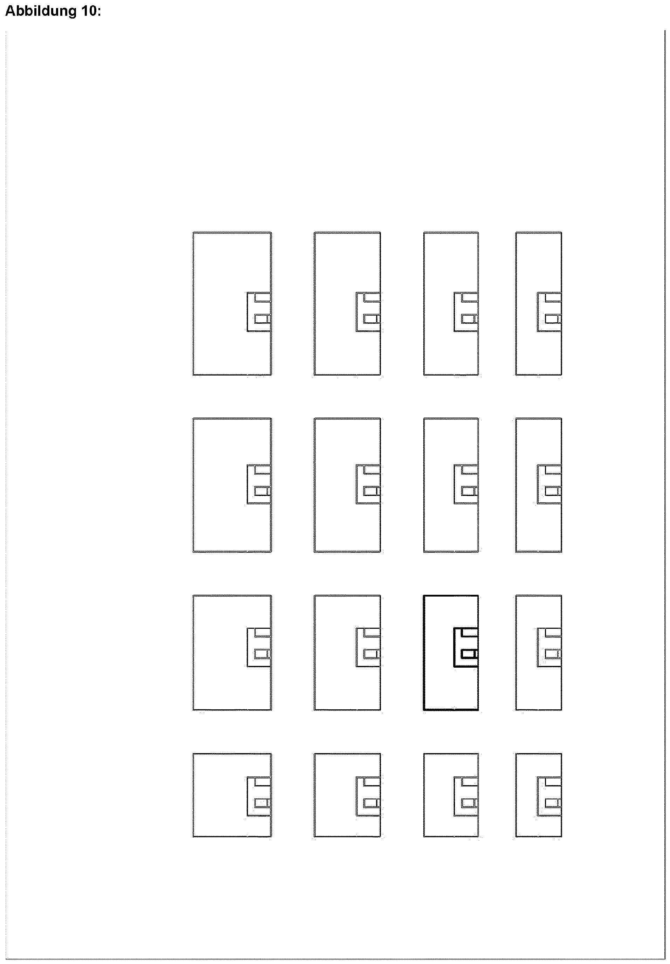

**Abbildung 10** stellt abstrahiert einen Teilausschnitt der Erschließungs-Matrix dar, in dem mehrere Ausprägungen des Erschließungs-Moduls Typ A zu sehen sind. Sie wird zunächst im CAD-Programm mit Hilfe eines Skriptes automatisch generiert. Jedes Wohnungs-Modul desselben Typs in dieser Matrix hat andere Maße. Im nächsten Schritt werden die Module analysiert und mit Attributen befüllt, wie z.B. Flächenwerte und Qualitäten. Danach werden diese Elemente in eine tabellarische Form abstrahiert (CSV, TXT o.ä.) und in die Datenbank eingespeist. Diese Methode hat sich bei allen Modul-Arten bewährt, da Module einfach für Planer in dem CAD-Programm (Revit) zu erstellen sind und ihnen da schon eine gewissen Intelligenz eingebaut werden kann (z.B. dass die Wände des Treppenkerns unter einander die Abstände wahre und sich der Treppenkern nur im Ganzen in der Erschließung verschiebt). Dies kommt dem herkömmlichen Planen nahe und gewährleistet so, dass nicht die hier fachfremden Informatiker die Planung übernehmen müssen.

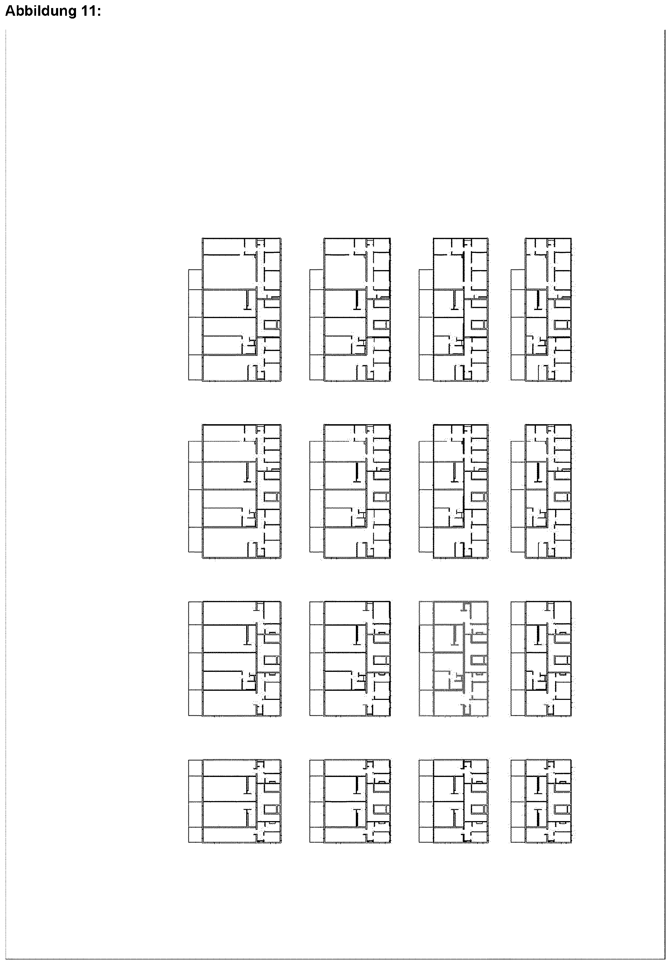

**Abbildung 11** stellt abstrahiert einen Teilausschnitt der Erschließungs-Lösung-Matrix dar, in der mehrere Ausprägungen der Erschließungs-Lösungen-Moduls auf Basis von Typ A zu sehen sind. Dieser Prozess läuft bevorzugt innerhalb der Datenbank ab und wurde hier nur mit Hilfe der Module im CAD-Programm sichtbar gemacht. Die Methode versucht jede Erschließung in der Erschließungs-Matrix mit jeder Wohnungs-Lösung aus der Wohnungs-Lösungs-Matrix zu befüllen, sofern es die Restriktionen der Module es zulassen. So kann es für eine Erschließungs-Ausprägung mehrere Versionen mit unterschiedlichen Wohnungs-Kombinationen geben, die voneinander abweichende Merkmale aufweisen.
**Abbildung 12** stellt abstrahiert eine Lösung aus der Erschließungs-Lösung-Matrix dar. Die Qualität der Erschließung ist die Summer der Qualitäten der Wohnungs-Lösungen, die in ihr untergebracht sind.

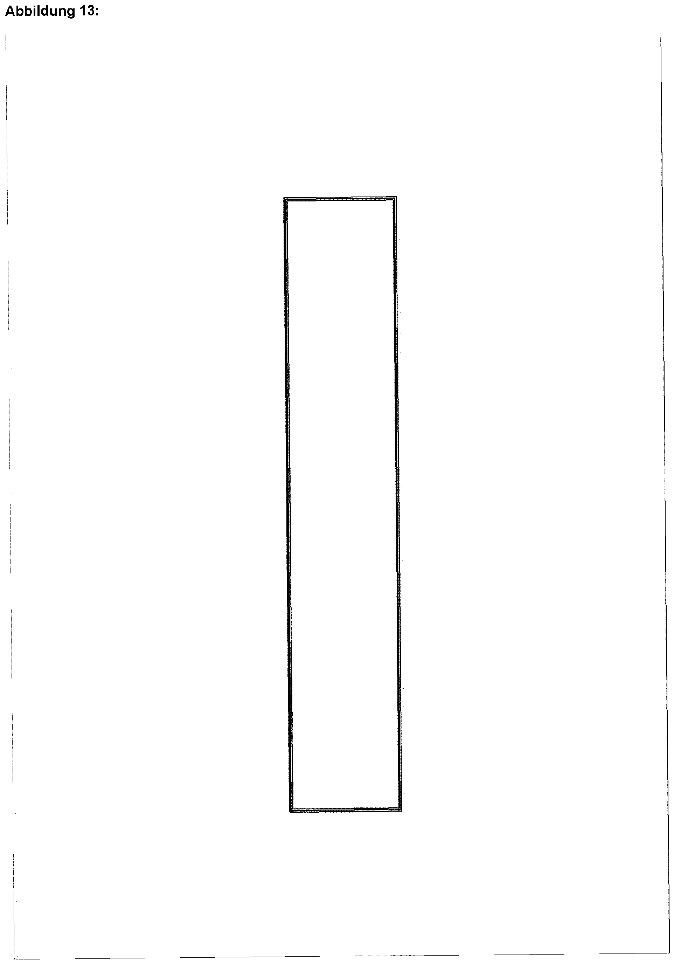

**Abbildung 13** stellt eine Ausprägung des Geschoss-Moduls Typ A (hier z. B. Rechteck, Erdgeschoss) (in 2D) in einem CAD-Programm in einer Draufsicht dar. Es kann in seinen äußeren Abmessungen manipuliert werden und das Innenleben passt sich dem an. Es dient im Prozess der Visualisierung, der Ermittlung der Qualitäten und als Platzhalter für Elemente, die im späteren Verlauf das 3D-Gebäudemodell bilden.

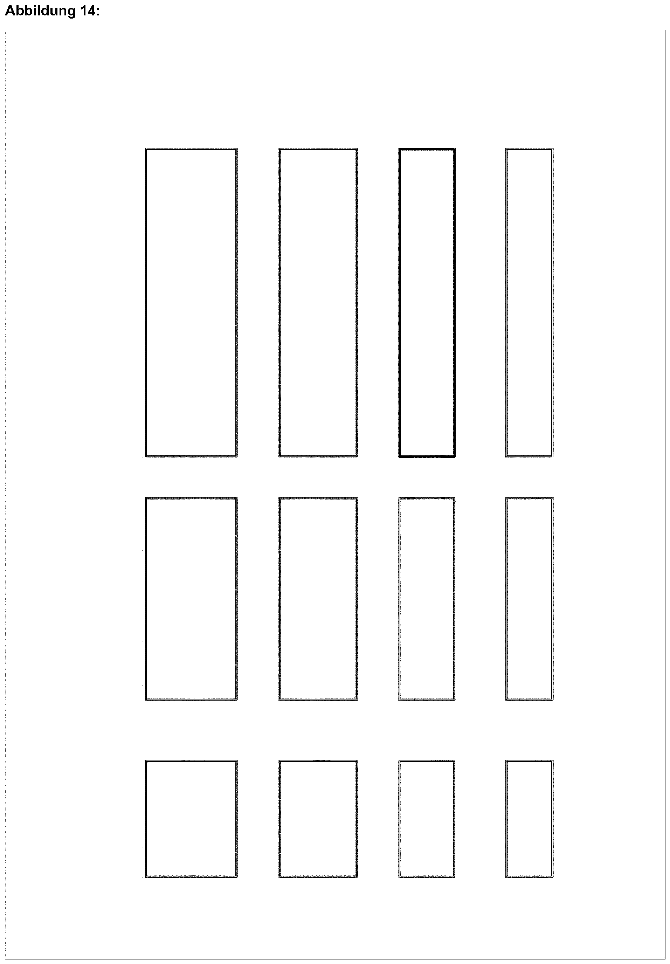

**Abbildung 14** stellt abstrahiert einen Teilausschnitt des der Geschoss-Matrix dar, in der mehrere Ausprägungen des Geschoss-Moduls Typ A zu sehen sind. Sie wird zunächst in dem CAD-Programm mit Hilfe eines Skriptes automatisch generiert. Jedes Geschoss-Modul desselben Typs in dieser Matrix hat andere Maße. Im nächsten Schritt werden die Module analysiert und mit Attributen befüllt, wie z.B. Flächenwerte und Qualitäten. Danach werden diese Elemente in eine tabellarische Form abstrahiert (CSV, TXT o.ä.) und in die Datenbank eingespeist. Diese Methode hat sich bei allen Modul-Arten bewährt, da Module einfach für Planer in dem CAD-Programm (Revit) zu erstellen sind und ihnen da schon eine gewissen Intelligenz eingebaut werden kann (z.B. der Abstand der Außenwände bei unterschiedlichen Materialstärken). Dies kommt dem herkömmlichen Planen nahe und gewährleistet so, dass nicht die hier fachfremden Informatiker die Planung übernehmen müssen.

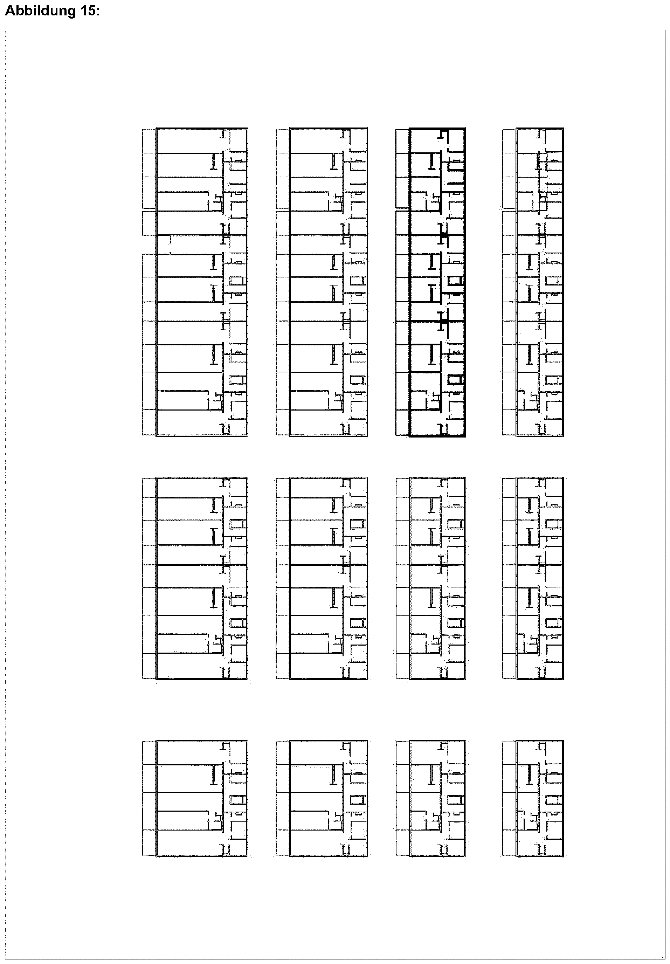

**Abbildung 15** stellt abstrahiert einen Teilausschnitt der Geschoss-Lösung-Matrix dar, in der mehrere Ausprägungen der Geschoss-Lösungen-Moduls auf Basis von Typ A zu sehen sind. Dieser Prozess läuft innerhalb der Datenbank ab und wurde hier nur mit Hilfe der Module im CAD-Programm sichtbar gemacht. Die Methode versucht jedes Geschoss in der Geschoss-Matrix mit jeder Erschließungs-Lösung aus der Erschließung-Lösungs-Matrix zu befüllen, sofern es die Restriktionen der Module es zulassen. So kann es für eine Geschoss-Ausprägung mehrere Versionen mit unterschiedlichen Erschließungs-Kombinationen geben, die voneinander abweichende Merkmale aufweisen. **Abbildung 16** stellt abstrahiert eine Lösung aus der Geschoss-Lösung-Matrix dar. Die Qualität des Geschosses ist die Summer der Qualitäten der Erschließungs-Lösungen, die in ihr untergebracht sind.

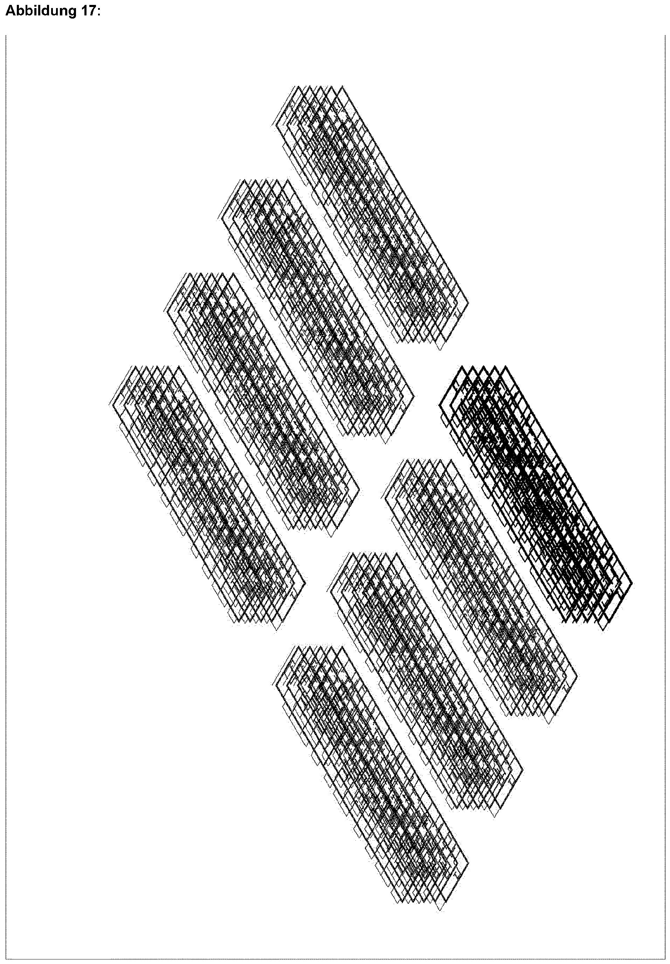

**Abbildung 17** stellt abstrahiert einen Teilausschnitt der Gebäude-Lösung-Matrix dar, in der mehrere Ausprägungen der Gebäude-Lösungen-Moduls zu sehen sind. Dieser Prozess läuft innerhalb der Datenbank ab und wurde hier nur mit Hilfe der Module im CAD-Programm sichtbar gemacht. Die Methode versucht die Geschosse in der Geschoss-Lösung-Matrix miteinander vertikal zu kombinieren (stapeln), sofern es die Restriktionen der Module es zulassen. So kann es für eine Gebäude-Ausprägung (äußere Abmaße und Geschossigkeit) mehrere Versionen mit unterschiedlichen Geschoss-Kombinationen geben, die voneinander abweichende Merkmale aufweisen.

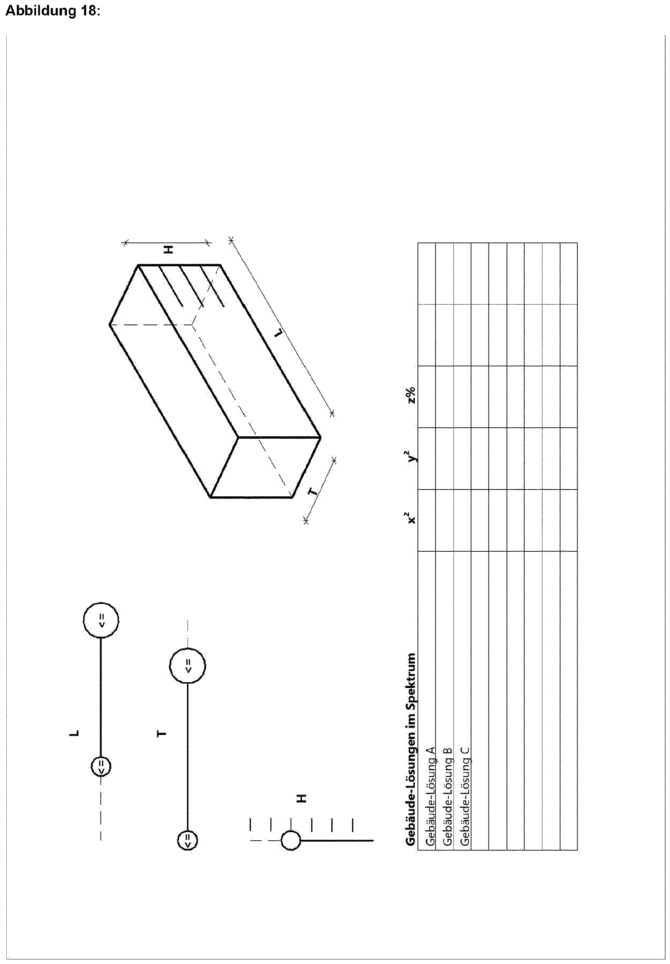

**Abbildung 18** zeigt eine abstrahierte Darstellung der Bedienoberfläche dar, mit dessen Hilfe man aus der Menge der Gebäude-Lösungen aus der Gebäude-Lösungs-Matrix eine Auswahl für die weiteren Schritte treffen kann. Die gezeigten Funktionen: wählbare Geschossigkeit, zusätzliche Anzeige der Gebäudelänge und -breite, andere Anzeiger zu Flächen, Längen, Prozentanzeigen.

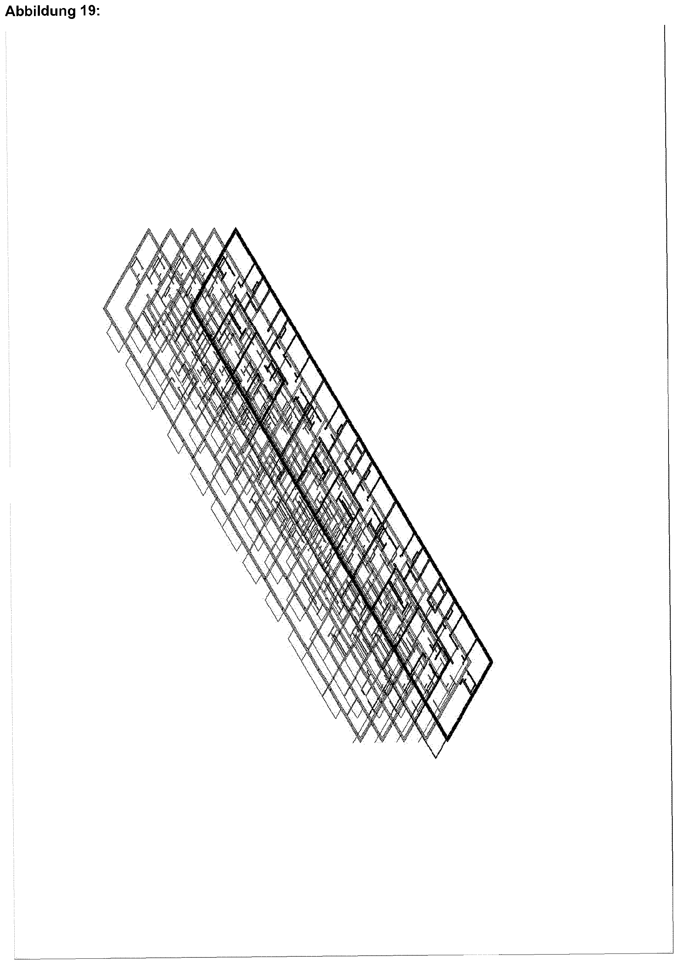

**Abbildung 19** stellt abstrahiert eine Lösung aus der Gebäude-Lösung-Matrix dar. Die Qualität des Gebäudes ist die Summer der Qualitäten der Geschoss-Lösungen, die in ihr untergebracht sind. Diese Lösung wird an das CAD-Programm übergeben.

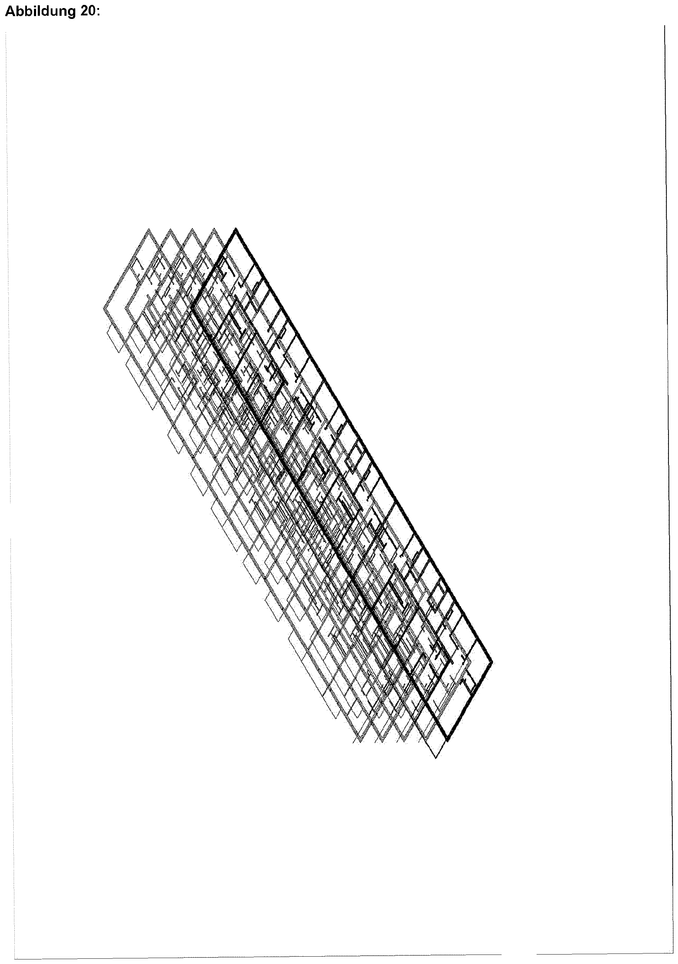

**Abbildung 20** stellt das Resultat des Lösung-Imports da. Es werden mit Hilfe eines automatisierungs-Skriptes die Ausprägungen der Modul-Typen (u.a. Raum-Modul Typ A Abb. 3, Wohnungs-Modul Typ A Abb. 5, Erschließungs-Modul Typ A Abb. 9 und Geschoss-Modul Typ A Abb. 13) innerhalb des CAD-Programms platziert, ggf. gedreht und attribuiert.

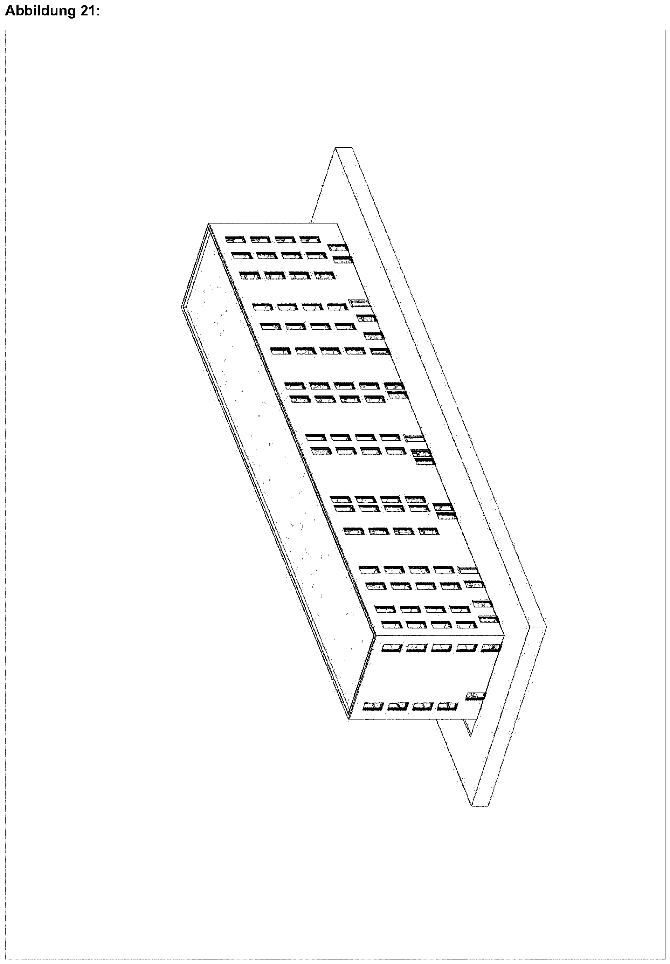

**Abbildung 21** stellt das 3D-Gebäudemodell dar, dass auf Grundlager der Module aus einzelnen Bauteilen (Wände, Geschossdecken, Türen, Fenster, Treppen, Aufzüge, Möbel) erstellt wurde.

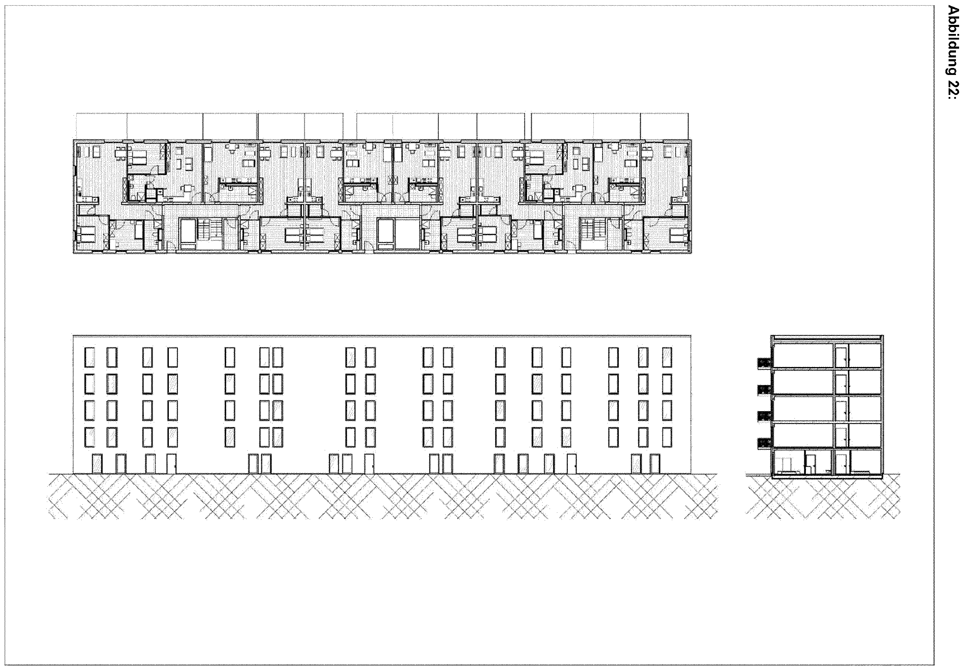

**Abbildung 22** stellt abstrahiert die Planansichten dar, die aus dem 3D-Gebäudemodell abgeleitet werden.

### BEZUGSZEICHENLISTE

- 2: Möbelmodule
- 3: Raummodul
- 4: Raummatrix
- 5: Wohnungsmodul
- 6: Wohnungsmatrix
- 7: Wohnungs-Lösungsmatrix
- 8: Wohnungslösung
- 9: Erschließungsmodul
- 10: Erschließungsmatrix
- 11: Erschließungs-Lösungsmatrix
- 12: Erschließungslösung
- 13: Geschossmodul
- 14: Geschossmatrix
- 15: Geschosslösungsmatrix
- 16: Geschosslösung
- 17: Gebäudelösungsmatrix
- 18: Filter
- 19: Gebäudelösung
- 20: Modulmodell
- 21: Gebäudemodell
- 22: Planungsdokumente
- 23: Mengenoutput für Kalkulation

## Patentansprüche

1. Computer- und/oder netzwerkbasiertes Verfahren für einen Entwurf von mindestens einem Gebäude für mindestens eine vorgegebene Gebäudeform und/oder vorgegebenen Abmessungen des Gebäudes,
umfassend mindestens eine Gebäudeuntereinheit, wobei das Verfahren die folgenden Schritte umfasst:
- Bereitstellung von Modulen fürjeweils
mindestens eine Gebäudeform und
mindestens einen Gebäudeuntereinheitstypen,
wobei die jeweiligen Module wesentliche technische Vorgaben, Parameterbereiche für Abmessungen und/oder Restriktionen für die jeweilige Gebäudeform und die jeweilige Untereinheit enthalten;
- Erstellung und Speicherung einer Untereinheits-Matrix für den mindestens einen Gebäudeuntereinheitstyp unter Berücksichtigung der Module für die jeweilige Gebäudeuntereinheit, wobei die Untereinheits-Matrix alle möglichen Grundrisse der Gebäudeuntereinheit und dazugehörige angepasste Module für jeden Grundriss umfasst,
- Berechnung und Speicherung von möglichen Kombinationen von Gebäuden und Gebäudeuntereinheiten unter Berücksichtigung:
iii. der Module für die Gebäudeform und/oder der vorgegebenen Abmessungen des Wohngebäudes,
iv. der mindestens einen Untereinheits-Matrix,
wobei bautechnische Größen unter gegenseitiger Berücksichtigung der Module bestimmt und/oder angepasst werden.

2. Verfahren nach dem vorherigen Anspruch,
wobei bei mehreren Gebäudeuntereinheiten die Berechnung und Speicherung von möglichen Kombinationen von Gebäuden und Gebäudeuntereinheiten schrittweise in einer Reihenfolge von der kleineren zur größeren Untereinheit vorgenommen wird,
wobei die Kombination der mindestens einen Untereinheiten mit dem Gebäude als letztes berechnet wird und
wobei für jede Berechnung jeweils die Berechnung und Speicherung der nächstkleineren Untereinheit berücksichtigt wird.

3. Verfahren nach einem oder mehreren der vorherigen Ansprüche,
wobei bautechnische Größen ausgesucht sind aus der Gruppe Spannweite einer Decke, Dicke einer Decke und/oder die Erfordernis und/oder Positionierung eines Unterzugs umfassen, welche unter Berücksichtigung von Wandaufbauten, Wandstärken, Wandmaterialien Deckenspannweiten, der Positionierung von Brandwänden und/oder der Positionierung von tragenden Wänden berechnet werden.

4. Verfahren nach einem oder mehreren der vorherigen Ansprüche,
wobei bautechnische Größen ausgesucht sind aus der Gruppe umfassend Abmessungen und/oder Positionen von: Untereinheiten
und/oder
Abmessungen und/oder Position von: Türen, Belichtungsflächen und/oder Fensterfläche.

5. Verfahren nach einem oder mehreren der vorherigen Ansprüche, umfassend weiterhin folgende Schritte:
- Visuelle Darstellung wesentlicher Parameter berechneter Untereinheiten und/oder Gebäude und/oder Erstellung eines 3D-Modells berechneter Untereinheiten und/oder Gebäude.

6. Verfahren nach einem oder mehreren der vorherigen Ansprüche,
wobei die Gebäudeuntereinheit mindestens eine Erschließung, ein Geschoss, eine Wohnung, einen Raum und/oder ein Möbel umfasst.

7. Verfahren nach einem oder mehreren der vorherigen Ansprüche,
wobei die möglichen Kombinationen in einer Graphdatenbank abgespeichert werden, welche Abfragen in Bezug auf beliebige Kombinationen von Untereinheitstypen, Abmessungen des Gebäudes und/oder bautechnischer Größen erlaubt und geeignete Kombinationen ausgeben kann.

8. Verfahren nach einem oder mehreren der vorherigen Ansprüche,
wobei die Untereinheits-Matrix mindestens einen Schwellenwertparameter umfasst, der einzuhaltende Abstände von Wänden und/oder Schwellenwerte von Ausdehnungen des Untereinheitsgrundrisses in x- und/oder y-Richtung umfassen, ab denen eine Verschiebung von Wänden stattfindet.

9. Verfahren nach einem oder mehreren der vorherigen Ansprüche 6-8,
wobei bautechnische Größen die Positionierung einer Wohnungstrennwand zwischen zwei Wohnungen und/oder die Positionierung einer Außenwand an einer Wohnungsgebäudeaußenfläche umfasst,
wobei die Außenwand bevorzugt in Abhängigkeit der Steuerungselemente als normale Außenwand mit Belichtungsflächen oder als geschlossene Brandwand gestaltet sein kann.

10. Verfahren nach einem oder mehreren der vorherigen Ansprüche 6-9,
wobei die Module des Wohnungstyps Elemente umfassen ausgesucht aus der Gruppe:
Informationen, Parameter und/oder Restriktionen zum Grundriss der Wohnung; Informationen, Parameter und/oder Restriktionen zu einer Ausrichtung und/oder Position von Innenwänden in Abhängigkeit vom Grundriss; Informationen, Parameter und/oder Restriktionen zu einer Belichtungsfläche von Räumen; Informationen, Parameter und/oder Restriktionen zu einer Größe von Türen und/oder einem Abstand von Rohbauöffnungen zu angrenzenden Wänden;
Informationen, Parameter und/oder Restriktionen zu einer Schachtabmessung und/oder einer Fensterflächen und/oder Vorgaben für eine Flächenauswertungen nach DIN 277.

11. Verfahren nach einem oder mehreren der vorherigen Ansprüche,
wobei bei der Erstellung der Untereinheits-Matrix die möglichen Untereinheitsgrundrisse durch Variation innerhalb eines vorgegeben Rastermaßes erzeugt werden, welches vorzugsweise 12,5 cm beträgt.

12. Verfahren nach einem oder mehreren der vorherigen Ansprüche 6-11, umfassend weiterhin folgende Schritte:
- Erstellung eines Bewertungskatalogs für Wohnungsgrundrisse;
- Bewertung jedes in der Wohnungsmatrix erstellten Wohnungsgrundrisses anhand des Bewertungskatalogs;
- Bevorzugt Auswahl von geeigneten Wohnungen aus den Wohnungsgrundrissen anhand der Bewertungen.

13. Verfahren nach einem oder mehreren der vorherigen Ansprüche,
wobei von einer CAD Programmkomponente Module, Untereinheits-Matrix, die möglichen Kombinationen von Untereinheiten und/oder bautechnische Größen eingelesen werden und anhand dieser das 3D-Modell der berechneten Untereinheiten und/oder Wohngebäude erstellt wird.

14. Computerprogrammprodukt, welches so angepasst ist, dass es das Verfahren nach einem oder mehreren der vorherigen Ansprüche ausführt.

15. Computerprogrammprodukt nach dem vorherigen Anspruch,
welches so konfiguriert ist, dass bei der Ausführung von Programmschritten alle zur Verfügung stehenden Prozessorkerne genutzt werden und/oder eine Verwendung des Arbeitsspeichers an die Größe des Arbeitsspeichers angepasst wird.
